# EUROPEAN PATENT APPLICATION

(11) **EP 2 320 108 A2**
(43) Date of publication of application: **11.05.2011**
(21) Application number: 10011310.9
(22) Date of filing: 28.09.2010
(51) Int. Cl.: F16F 15/04

(54) **Vibration isolator base**

(30) Priority: 05.11.2009 JP 2009253954; 26.11.2009 JP 2009269216
(71) Applicant: Kurashiki Kako Co., Ltd., Kurashiki-shi, Okayama 712-8555 (JP)
(72) Inventor: Odawara, Masamichi, Kurashiki-shi Okayama 712-8555 (JP); Ito, Koji, Kurashiki-shi, Okayama 712-8555 (JP); Yamamoto, Satoshi, Kurashiki-shi Okayama 712-8555 (JP)
(74) Representative: Herrmann, Uwe

(57) **Abstract**

Provided is a vibration isolator base (1) constituted by a pair of units (3, 3) which are arranged parallel to each other, in each of which an isolator (11, 11) is interposed between an upper unit (5) and a lower unit (7) each constituted by a long angular pipe member, and in which the upper units (5, 5) in pairs are coupled to each other at both end portions thereof by beam members (9, 9). The beam member (9) is fitted into a fitting portion (37, 37) provided at both end portions of each of the upper units (5, 5) so as to couple the upper units (5, 5) to each other.

## Description

The present disclosure relates to vibration isolator bases used for installation of equipments such as air-conditioners which generate large vibration, and more particularly, to a structure in which two long units are coupled to each other while being arranged parallel to each other.

Conventionally, vibration isolator bases of this type have employed a structure in which, in order to allow disassembly in consideration of convenience during transportation and in an off-the-shelf state, members constituting the vibration isolator base are connected to each other not by welding but by a fastening means such as a screw. Many of the vibration isolator bases are configured to be assembled at their installation sites.

In some of the vibration isolator bases which are configured to be assembled at their installation sites as just described above, in order to suppress complication of a connecting structure of longitudinal members and traverse members constituting the bases, corner members are used to connect the longitudinal members and the traverse members to each other.

For example, Japanese Patent Publication No. 2001-304335 describes a vibration isolator table in which frame members constituting mounting frames and base frames are butt against each other at corner portions and fastened to each other with screws through the intermediation of connecting fittings.

### SUMMARY

However, in the vibration isolator table described in Japanese Patent Publication No. 2001-304335, both the mounting frames and the base frames are formed in rectangular shapes. Thus, a weight of the vibration isolator table as a whole is increased, and hence convenience during transportation is not markedly high. Further, fastening is made with the screws through the intermediation of the connecting fittings, and hence there is a problem in that assembly of the vibration isolator table at installation sites takes time and effort.

In this context, in order to facilitate the assembly at the installation sites, for example, traverse members and longitudinal members may be fitted to each other. However, in a structure in which the traverse members and the longitudinal members are merely fitted to each other, fastening is unreliable in comparison with the case of fixation with use of screws or the like. Thus, there is a risk that what is called "backlashes" occur.

The present invention has been made in view of the above-mentioned problems. It is therefore an object of the present invention to provide a light-weight, low-cost, and compact vibration isolator base used for installation of equipments which generate large vibration, the vibration isolator base being easily assembled, and at the same time, capable of suppressing backlashes.

In order to achieve the object, in the present invention, backlashes in longitudinal, traverse, and vertical directions between beam members and upper units are restricted by provision of the beam members (traverse members) for coupling the upper units of a pair of units (longitudinal members) to each other and by fitting of the beam members to both end portions of the upper units.

According to a first aspect of the present invention, a vibration isolator base includes the pair of units which are arranged parallel to each other, in each of which a vibration isolator body is interposed between the upper unit and a lower unit each constituted by a long angular pipe member, and in which the upper units in pairs are coupled to each other at both the end portions thereof by the beam members. In the vibration isolator base, both the end portions each of the upper units are each provided with a fitting portion, and the beam members are fitted into the fitting portions of the upper units so as to couple the upper units to each other. The vibration isolator base includes a first regulating means which is configured to regulate the backlash in the vertical direction between the beam member and the upper unit by fitting of the beam member into the fitting portion, a second regulating means which is configured to regulate the backlash in the longitudinal direction in which the upper unit extends between the beam member and the upper unit by fitting of the beam member into the fitting portion, and a third regulating means which is configured to regulate the backlash in the traverse direction in which the upper units are arranged between the beam member and the upper unit by fitting of the beam member into the fitting portion.

According to the first aspect, by fitting of each of the beam members into the fitting portions provided at each of the end portions of the pair of the upper units, the pair of upper units are coupled to each other, and hence the vibration isolator base can be easily assembled. Further, convenience during transportation and in an off-the-shelf state is enhanced by adoption of such a structure which allows disassembly, and weight reduction can be achieved by a rectangular frame shape formed with use of only the upper units together with the beam members.

Further, by fitting of the beam member into the fitting portion, the vibration isolator base is provided with the first to third regulating means for respectively regulating the backlashes in the vertical direction, the longitudinal direction, and the traverse direction between the beam member and the upper unit. Thus, the vibration isolator base can be easily assembled, and at the same time, the backlashes between the beam member and the upper unit can be suppressed.

The above example achieves a reduction in weight and size of the vibration isolator base. Further, the vibration isolator base can be easily assembled, and at the same time, the backlashes therein can be suppressed.

According to a second aspect of the present invention, in the first aspect, each of the fitting portions is open to an outside in the longitudinal direction. Each of the beam members includes an attaching portion which is fitted from the outside in the longitudinal direction into each of the fitting portions while being elastically deformed mainly in the vertical direction. The attaching portion is provided with a groove portion extending in the longitudinal direction. Each of the fitting portions is provided with a projecting portion which is fitted to the groove portion by fitting of the attaching portion to each of the fitting portions from the outside in the longitudinal direction, and an engagement portion which is engaged with the attaching portion from the outside in the longitudinal direction. The first regulating means is constituted at least by the fitting portion and the attaching portion. The second regulating means is constituted at least by the fitting portion, the attaching portion, and the engagement portion. The third regulating means is constituted at least by the groove portion and the projecting portion.

According to the second aspect, when the attaching portion is fitted from the outside in the longitudinal direction into the fitting portion, the attaching portion is fitted into the fitting portion while being elastically deformed mainly in the vertical direction. Thus, in a state in which the vibration isolator base is assembled, the attaching portion constantly presses the fitting portion in the vertical direction. As a result, the attaching portion and the fitting portion (first regulating means) regulate the backlash in the vertical direction between the beam member and the upper unit.

Further, each of the fitting portions is provided with the engagement portion which is engaged with, by fitting of the attaching portion to each of the fitting portions from the outside in the longitudinal direction, the attaching portion from the outside in the longitudinal direction. Thus, in the state in which the vibration isolator base is assembled, the attaching portion is sandwiched between the engagement portion and the fitting portion. As a result, the attaching portion, the engagement portion, and the fitting portion (second regulating means) regulate the backlash in the longitudinal direction between the beam member and the upper unit.

Still further, while the attaching portion is provided with the groove portion extending in the longitudinal direction, each of the fitting portions is provided with the projecting portion which is fitted to the groove portion by fitting of the attaching portion to each of the fitting portions from the outside in the longitudinal direction. Thus, the groove portion and the projecting portion (third regulating means) regulate the backlash in the traverse direction between the beam member and the upper unit.

In this way, the backlashes of the vibration isolator base can be suppressed with a simple structure. Thus, it does not take a long period of time to manufacture the beam member and the upper unit, or manufacturing costs thereof do not increase, which leads to cost reduction and quick delivery.

According to a third aspect of the present invention, in the second aspect, each of the fitting portions includes two first wall portions facing each other in the traverse direction, a second wall portion coupling the two first wall portions to each other at upper edges thereof and extending to a further outside in the longitudinal direction relative to side edges on the outside in the longitudinal direction of the two first wall portions, and two third wall portions each extending to the outside in the longitudinal direction from a lower portion of each of the side edges on the outside in the longitudinal direction of the two first wall portions. The attaching portion includes a substantially horizontal first plate portion extending in the longitudinal direction, a second plate portion extending to a downside from a side edge on the inside in the longitudinal direction of the first plate portion, and a third plate portion extending from a lower edge of the second plate portion in a manner of inclining to the downside toward the outside in the longitudinal direction. The attaching portion is fitted into each of the fitting portions so that contact is made in the following pairs: the first plate portion and the second wall portion, the second plate portion and the two first wall portions, and the third plate portion and the two third wall portions. The first regulating means is constituted at least by the second wall portion, the first plate portion pressing the second wall portion, the third wall portion, and the third plate portion pressing the two third wall portions.

According to the third aspect, the third wall portions each extend to the outside in the longitudinal direction from the lower portion of each of the side edges on the outside in the longitudinal direction of the two first wall portions. Thus, each of the first wall portions and each of the third wall portions exhibit a substantially L shape seen in the traverse direction. Further, the second wall portion couples the two first wall portions to each other at the upper edges thereof and extends to the further outside in the longitudinal direction relative to the side edges on the outside in the longitudinal direction of the two first wall portions. Thus, a lower surface of the second wall portion, the side edges on the outside in the longitudinal direction of each of the first wall portions, and the upper edge of each of the third wall portions exhibit a substantially C shape seen in the traverse direction.

Meanwhile, the first to third plate portions constituting the attaching portion also exhibit a substantially C shape seen in the traverse direction, and the third plate portion inclines to the downside toward the outside in the longitudinal direction. Thus, the attaching portion is more easily and elastically deformed in the vertical direction. When the attaching portion is fitted into each of the fitting portions so that contact is made in the following pairs: the first plate portion and the second wall portion, the second plate portion and the two first wall portions, and the third plate portion and the two third wall portions, the first plate portion presses the lower surface of the second wall portion to the upside and the third plate portion presses an upper edge of the two third wall portions.

In this way, the backlash in the vertical direction between the beam member and the upper unit can be regulated with an easy assembly operation and a simple structure.

According to a fourth aspect of the present invention, in the third aspect, the engagement portion constitutes two stopper portions each formed on an end portion on the outside in the longitudinal direction of the upper edge of the two third wall portions and protruding to the upside. The third plate portion climbs over the two stopper portions from the outside in the longitudinal direction so as to be sandwiched between the two stopper portions and the two first wall portions in such a manner that an end on the outside in the longitudinal direction of the third plate portion is hooked to the two stopper portions. The second regulating means is constituted at least by the two stopper portions, the third plate portion pressing the two stopper portions, the two first wall portions, and the second plate portion pressing the two first wall portions.

According to the forth aspect, when the attaching portion is fitted to the fitting portion from the outside in the longitudinal direction, the third plate portion climbs onto the two stopper portions formed on the upper edge of the two third wall portions while the third plate portion is elastically deformed to the upside. After climbing over the two stopper portions, the third plate portion is sandwiched between the two stopper portions and the two first wall portions in such a manner that the end on the outside in the longitudinal direction of the third plate portion is hooked to the two stopper portions. Then, the end on the outside in the longitudinal direction of the third plate portion presses the two stopper portions, and the second plate portion presses ends on the outside in the longitudinal direction of the two first wall portions. As a result, the backlash in the longitudinal direction between the beam member and the upper unit can be regulated with an easy assembly operation and a simple structure.

According to a fifth aspect of the present invention, in the third or fourth aspect, the projecting portion constitutes a fourth wall portion extending from the second wall portion to the downside and in the longitudinal direction. The groove portion constitutes a cutout groove portion formed in the first plate portion and open to the inside in the longitudinal direction. The third regulating means is constituted at least by the fourth wall portion and the cutout groove portion.

According to the fifth aspect, when the attaching portion is fitted to the fitting portion from the outside in the longitudinal direction, the fourth wall portion extending to the downside from the second wall portion is fittingly inserted into the cutout groove portion open to the inside in the longitudinal direction. As a result, the backlash in the traverse direction between the beam member and the upper unit can be regulated with an easy assembly operation and a simple structure.

In addition, by adoption of the structure in which the fourth wall portion is fittingly inserted into the cutout groove portion extending in the longitudinal direction, unlike, for example, a structure in which a projection-like portion is fitted in a recess-like portion, an angle formed between the unit and the beam member is less liable to change in plan view. Thus, the vibration isolator base formed in a rectangular shape is prevented from being deformed into a parallelogram shape.

According to a sixth aspect of the present invention, in the fifth aspect, the fourth wall portion is formed by bending, to the downside, of a side edge on each side in the traverse direction of a part of the second wall portion which part is on the outside in the longitudinal direction relative to the two first wall portions. The fourth wall portion extends from the second wall portion to the downside through intermediation of a round portion. Multiple ones of the cutout groove portion are formed at positions corresponding to the fourth wall portions. An edge portion in the traverse direction of each of the two cutout groove portions climbs onto the round portion.

According to the sixth aspect, when the attaching portion is fitted to the fitting portion from the outside in the longitudinal direction, even when a slight dimensional error occurs between a clearance between the fourth wall portions and a clearance between the two cutout groove portions, due to deflection of the fourth wall portions formed by bending, the fourth wall portions are smoothly fittingly inserted into the two cutout groove portions. The attaching portion is fitted into the fitting portion such that the first plate portion and the second wall portion come into contact with each other, and hence the edge portion in the traverse direction of each of the two cutout groove portions climbs onto the round portion. As a result, the first plate portion is pressed by the fourth wall portions to both the outsides in the traverse direction, and hence the backlash in the traverse direction between the beam member and the upper unit can be further regulated.

Further, the edge portion in the traverse direction of each of the two cutout groove portions climbs onto the round portion, with the result that the first plate portion is pressed to the upside by the fourth wall portions so as to come into strong and close contact with the second wall portion. Thus, the backlash in the vertical direction between the beam member and the upper unit can be further regulated.

According to a seventh aspect of the present invention, in any one of the third to sixth aspects, the beam member is arranged on the outside in the longitudinal direction of the fitting portion and further includes a fourth plate portion continuous with the attaching portion. An angle formed between the first plate portion and the fourth plate portion is set to be lower than an angle formed between the second wall portion and an end on the outside in the longitudinal direction of the upper unit seen in the traverse direction. The first regulating means further includes the fourth plate portion.

According to the seventh aspect, the fourth plate portion continuous with the first plate portion at an angle lower than the angle formed between the second wall portion and the end on the outside in the longitudinal direction of the upper unit seen in the traverse direction presses the end on the outside in the longitudinal direction in a fastening manner. Thus, the backlash in the vertical direction between the beam member and the upper unit can be further regulated.

According to an eighth aspect of the present invention, in any one of the fourth to seventh aspects, the first plate portion is provided with a through-hole passing therethrough in the vertical direction. The second wall portion is provided with a protruding portion formed at a part corresponding to the through-hole and protruding to the downside so as to be fitted into the through-hole. The second regulating means further includes the through-hole and the protruding portion.

According to the eighth aspect, the projecting portion formed on the second wall portion is fitted into the through-hole formed in the first plate portion. Thus, relative movement of the beam member and the upper unit is regulated in the longitudinal direction.

According to a ninth aspect of the present invention, in any one of the fourth to seventh aspects, the second regulating means further includes another fixing member engaged with the beam member by being fitted to the fitting portion from the upside.

According to the ninth aspect, the other fixing member is engaged with the beam member by being fitted to the fitting portion from the upside, and hence the backlash in the longitudinal direction between the beam member and the upper unit can be more reliably regulated.

According to a tenth aspect of the present invention, in any one of the first to ninth aspects, the fitting portion and an upper bracket which cooperates with a shaft member extending in the vertical direction are provided at each of the end portions of the upper unit. A lower bracket for reinforcing the lower unit and fixing the shaft member is provided at each end portion of the lower unit. The lower bracket includes a top wall portion and a side wall portion extending to the downside from a side edge on each side in the traverse direction of the top wall portion, and is fitted to an inside of the lower unit.

According to the tenth aspect, the vibration isolator base includes the lower bracket including the top wall portion and the side wall portions, and open in cross-section is fittingly attached to the inside of the lower unit constituted by an angular pipe member and close in cross-section. Thus, when the lower unit should be deformed in a tapered manner to the upside in a case where a force of pulling the shaft member to the upside acts, an inner surface of the lower unit comes into close contact with an outer surface of the top wall portion of the lower bracket, and deformation behaviors of the lower bracket and the lower unit substantially conform to each other. Meanwhile, when both side wall portions of the lower bracket should be deformed in a manner of opening in the traverse direction in a case where a force of pushing-in the shaft member to the downside, an outer surface of each of the side wall portions of the lower bracket comes into contact with the inner surface of the lower unit, and the deformation behaviors of the lower bracket and the lower unit substantially conform to each other.

As just described, when one of the lower unit and the lower bracket should be deformed by conformation of the deformation behaviors of the lower bracket and the lower unit substantially to each other, another of the lower unit and the lower bracket is inevitably deformed. Therefore, in comparison with a case of exhibiting deformation behaviors different from each other, the lower unit and the lower bracket are less liable to be deformed.

Thus, even when a high force is applied to the upper unit, excessive deformation of the lower unit can be suppressed with a simple structure.

According to an eleventh aspect of the present invention, in the tenth aspect, the lower bracket is provided with a jettied wall portion formed at an end portion on the outside in the longitudinal direction thereof and extending in the traverse direction.

According to the eleventh aspect, the lower unit is supported with higher stability. Thus, at the time of installation, it is possible to prevent falling of one of the units which has not yet been coupled by the beam member to another of the units. In addition, after completion of assembly of the vibration isolator base, it is possible to prevent unstableness and the like of the lower unit, and hence to prevent the vibration isolator base as a whole from being twisted in which vibration isolator base both the units are coupled to each other by the beam member.

According to a twelfth aspect of the present invention, in the eleventh aspect, the lower bracket further includes a transverse wall portion extending to the downside from a side edge on the outside in the longitudinal direction of the top wall portion, and the jettied wall portion is formed integrally with the transverse wall portion.

According to the twelfth aspect, the lower bracket is formed not only in a substantially C shape in cross-section seen in the longitudinal direction in which the lower unit extends, but also in a substantially L shape in cross-section seen in the traverse direction. Thus, the cross-sectional performance of the lower bracket is enhanced, and hence it is possible to obtain high durability against a force applied through intermediation of the shaft member.

Further, the jettied wall portion is formed integrally with the transverse wall portion, and hence the lower bracket can be easily manufactured.

According to the vibration isolator base of the present invention, the pair of upper units are coupled to each other by fitting of the beam member into both the end portions of the upper units in pairs, and hence the vibration isolator base can be easily assembled. Further, convenience during transportation and in an off-the-shelf state is enhanced by disassembly capability. Still further, weight reduction can be achieved by a rectangular frame shape formed with use of only the upper units together with the beam members. In addition, the vibration isolator base includes the first to third regulating means for respectively regulating the backlashes in the vertical direction, the longitudinal direction, and the traverse direction between the beam member and the upper unit. Thus, the vibration isolator base is easily assembled, and at the same time, the backlashes between the beam member and the upper unit are suppressed.

### BRIEF DESCRIPTION OF THE DRAWINGS

FIG. 1A is a plan view of a vibration isolator base according to embodiments of the present invention.
FIG. 1B is a front view of the vibration isolator base.
FIG. 1C is a side view of the vibration isolator base.
FIG. 2A is a plan view of a lower earthquake-resistant bracket.
FIG. 2B is a front view of the lower earthquake-resistant bracket.
FIG. 2C is a side view of the lower earthquake-resistant bracket.
FIG. 3A is a perspective view of a guide member.
FIG. 3B is a perspective view of an upper earthquake-resistant bracket.
FIG. 4 is a perspective view of a corner portion at which an end portion of an upper unit and an end portion of a beam member are coupled to each other.
FIG. 5 is an enlarged side view of the corner portion at which the end portion of the upper unit and the end portion of the beam member are coupled to each other.
FIG. 6 is an enlarged front view of the corner portion at which the end portion of the upper unit and the end portion of the beam member are coupled to each other.
FIG. 7 is an enlarged plan view of the corner portion at which the end portion of the upper unit and the end portion of the beam member are coupled to each other.
FIG. 8 is a perspective view illustrating a state in which the guide member is assembled to the upper earthquake-resistant bracket.
FIG. 9A is a plan view of the beam member according to a first embodiment.
FIG. 9B is a front view of the beam member.
FIG. 9C is a side view of the beam member.
FIG. 10 is a perspective view illustrating an assembly operation of the beam member with respect to the upper unit.
FIG. 11A is a front view illustrating a state in which a force does not act on an earthquake-resistant bolt in an attachment structure of the lower earthquake-resistant bracket with respect to a lower unit.
FIG. 11B is a front view illustrating a state in which a force of pulling the earthquake-resistant bolt to an upside acts in the attachment structure of the lower earthquake-resistant bracket with respect to the lower unit.
FIG. 11C is a front view illustrating a state in which a force of pushing-in the earthquake-resistant bolt to a downside acts in the attachment structure of the lower earthquake-resistant bracket with respect to the lower unit.
FIG. 12 is a plan view of the beam member according to a second embodiment.
FIG. 13A is a plan view of a fixing member according to a second embodiment.
FIG. 13B is a front view of the fixing member.
FIG. 13C is a side of the fixing member.
FIG. 14A is an enlarged plan view of the corner portion at which the end portion of the upper unit and the end portion of the beam member are coupled to each other.
FIG. 14B is a sectional view taken along the arrows b-b of FIG. 14A.
FIG. 15A is a plan view of a fixing member according to a third embodiment.
FIG. 15B is a front view of the fixing member.
FIG. 15C is a side view of the fixing member.
FIG. 16A is a plan view of the corner portion at which the end portion of the upper unit and the end portion of the beam member are coupled to each other.
FIG. 16B is a side view of the corner portion at which the end portion of the upper unit and the end portion of the beam member are coupled to each other.
FIG. 17 illustrates the lower earthquake-resistant bracket according to another embodiment.
FIG. 18A is a front view illustrating a state in which a force does not act on an earthquake-resistant bolt in a conventional attachment structure of a lower earthquake-resistant bracket with respect to a lower unit.
FIG. 18B is a front view illustrating a state in which a force of pulling the earthquake-resistant bolt to an upside acts in the conventional attachment structure of the lower earthquake-resistant bracket with respect to the lower unit.
FIG. 18C is a front view illustrating a state in which a force of pushing-in the earthquake-resistant bolt to a downside acts in the conventional attachment structure of the lower earthquake-resistant bracket with respect to the lower unit.

### DETAILED DESCRIPTION

In the following, detailed description is made of embodiments of the present invention with reference to drawings.

### (First embodiment)

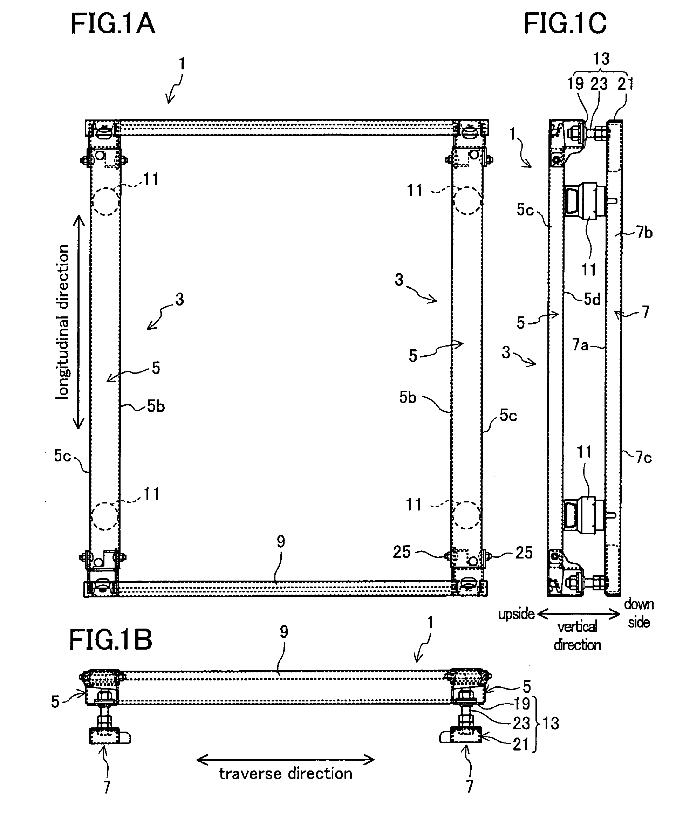

FIG. 1A is a plan view of an embodiment in which a vibration isolator base according to the present invention is applied to what is called an air-conditioner vibration isolator table. FIG. 1B is a front view, and FIG. 1C is a side view thereof. As illustrated in the figures, the vibration isolator base 1 is used for installation of an air-conditioner outdoor unit (not shown). In the vibration isolator base 1, a pair of long units 3 and 3 (rail-type vibration isolator table) each including an upper unit 5 and a lower unit 7 are arranged parallel to each other, and beam members 9 and 9 described later are respectively bridged between both ends of each of the units 3 and coupled to each other.

Note that, the following description is made on the premise that a direction in which the upper unit 5 extends is a longitudinal direction and a direction in which the upper units 5 are arranged is the traverse direction. Further, although description is made in the following of a corner portion at the lower right position in FIG. 1A, the other corner portions have substantially the same structure as that of the corner portion at the lower right position.

In the vibration isolator base 1, the pair of units 3 and 3 are structurally the same as each other, in each of which the upper unit 5 and the lower unit 7 each constituted by a long angular pipe member (structural angular steel pipe or the like) having a rectangular shape in cross-section are arranged at a predetermined clearance in a vertical direction, and two isolators (vibration isolator bodies) 11 and 11 are interposed separately from each other in the longitudinal direction. The isolator 11 is provided to reduce vibration transmission between the upper unit 5 and the lower unit 7. For example, a structure formed by integration of a coil spring and rubber or a resin case in which a coil spring is incorporated is used as the isolator 11.

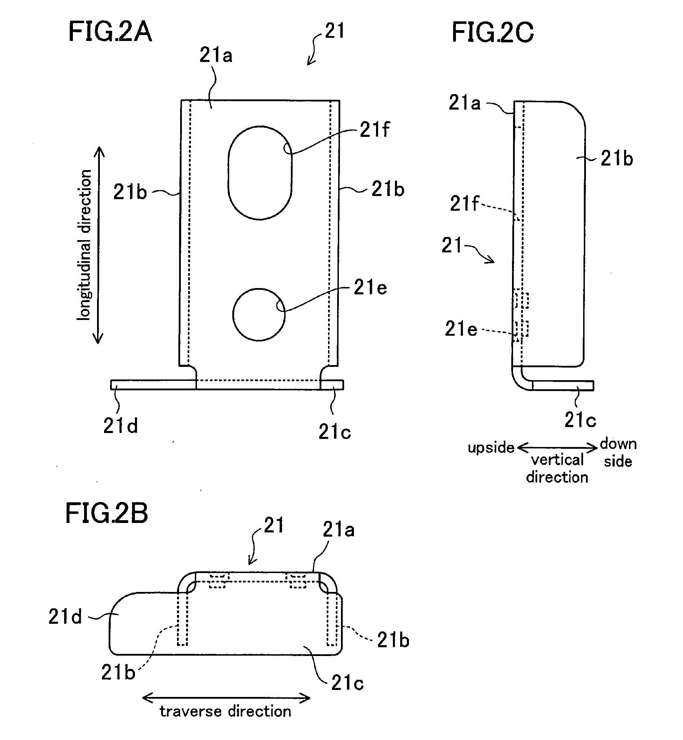

In the unit 3 according to this embodiment, the lower unit 7 is longer than the upper unit 5, and both end portions of the lower unit 7 project to an outside in the longitudinal direction respectively relative to end portions of the upper unit 5. On an inside of the projecting part of each of the end portions of the lower unit 7, there is attached a lower earthquake-resistant bracket (lower bracket) 21 illustrated in FIGS. 2A, 2B, and 2C for reinforcing the lower unit 7 and fixing an earthquake-resistant bolt (shaft member) 23.

The lower earthquake-resistant bracket 21 is formed by bending of a steel plate, includes a substantially rectangular top wall portion 21a and side wall portions 21b and 21b extending to a downside from side edges on both sides in the traverse direction of the top wall portion 21 a, and is formed in a substantially C shape in cross-section, that is, open to a lower side seen in the longitudinal direction. The top wall portion 21a is provided with a round hole 21e through which the earthquake-resistant bolt 23 is inserted, and an elongate hole 21f through which an anchor bolt (not shown) for fixing the lower unit 7 to a foundation is inserted.

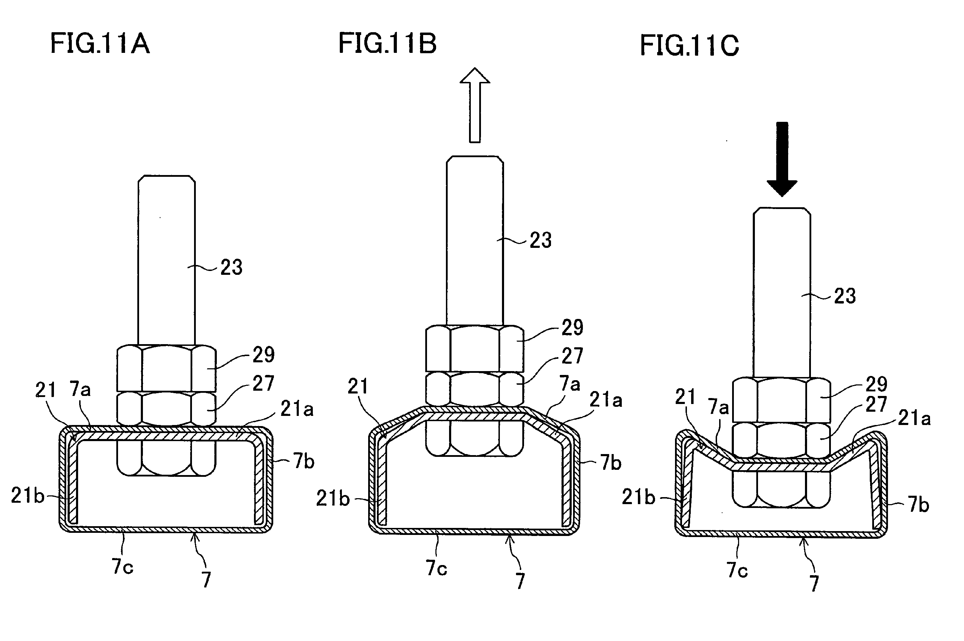

The lower earthquake-resistant bracket 21 is fittingly attached to the inside of each of the end portions of the lower unit 7 so that the top wall portion 21 a thereof comes into contact with a lower surface of an upper wall 7a of the lower unit 7. Note that, in the vibration isolator base 1 according to this embodiment, although clearances are formed between the side wall portions 21b and 21b of the lower earthquake-resistant bracket 21 and side walls 7b and 7b of the lower unit 7 (refer to FIG. 11A), the side wall portions 21b and 21b of the lower earthquake-resistant bracket 21 and the side walls 7b and 7b of the lower unit 7 may be held in contact with each other, for example, with an increase of a plate thickness of the lower earthquake-resistant bracket 21.

Further, in the illustration of FIG. 11A, clearances are formed between lower ends of the side wall portions 21b and 21b of the lower earthquake-resistant bracket 21 and a lower wall 7c of the lower unit 7. This is because round portions formed at corner portions between the side walls 7b and 7b and the lower wall 7c of the lower unit 7 and the lower ends of the side wall portions 21b and 21b of the lower earthquake-resistant bracket 21 are prevented from interfering with each other. Thus, lower end portions of the side wall portions 21b and 21b of the lower earthquake-resistant bracket 21 may be formed in conformity with inner surfaces of the corner portions so that the lower ends of the side wall portions 21b and 21b of the lower earthquake-resistant bracket 21 and the lower wall 7c of the lower unit 7 are held in contact with each other. With this structure, the side wall portions 21b and 21b of the lower earthquake-resistant bracket 21 function as ribs for reinforcing the lower unit. As a result, higher durability is obtained.

In addition, the lower earthquake-resistant bracket 21 includes a transverse wall portion 21c extending to the downside from a side edge on the outside in the longitudinal direction of the top wall portion 21a, and is formed in a substantially L shape in cross-section seen in the traverse direction. Thus, cross-sectional performance in the traverse direction of the lower earthquake-resistant bracket 21 is enhanced, and hence it is possible to obtain high durability against a force applied from the upper unit 5 to the lower earthquake-resistant bracket 21 through intermediation of the earthquake-resistant bolt 23.

Further, a substantially rectangular jettied portion (jettied wall portion) 21d projecting to a further inside in the traverse direction relative to the side wall portion 21b on an inside in the traverse direction (to the lower unit 7 as a counterpart) is formed integrally with the transverse wall portion 21 c. Thus, even when the lower unit 7 inclines to the inside in the traverse direction, the jettied portion 21d functions as a diagonal brace member, and hence the lower unit 7 is supported with higher stability. With this structure, at the time of installation, it is possible to prevent falling of one of the units 3 and 3 which has not yet been coupled by the beam member 9 to another of the units 3 and 3 as a counterpart. In addition, after completion of assembly of the vibration isolator base 1, it is possible to prevent unstableness and the like of the lower unit 7, and hence to prevent the vibration isolator base 1 as a whole from being twisted.

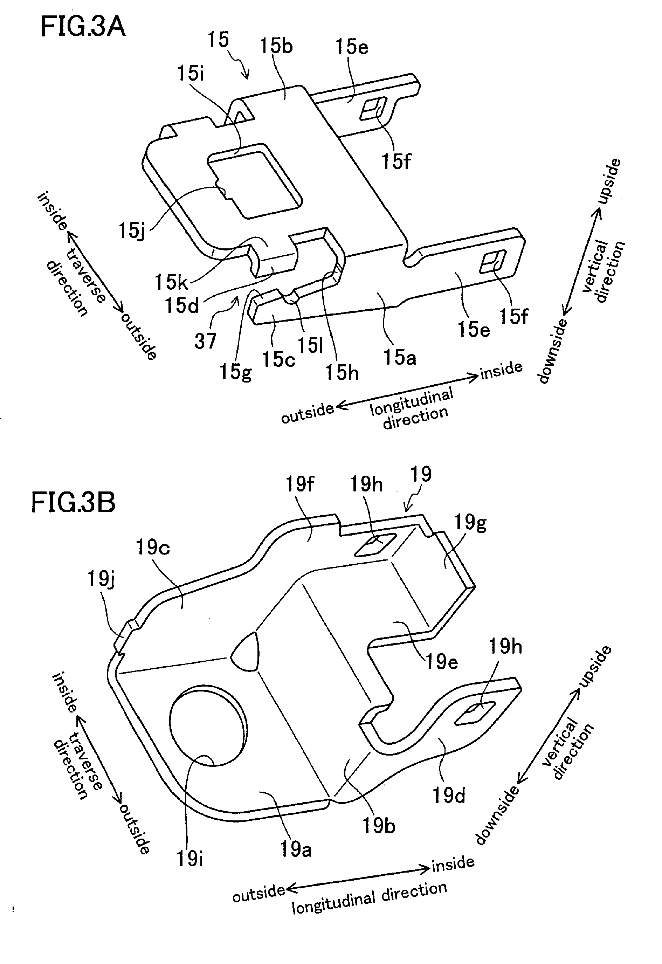

Meanwhile, an upper earthquake-resistant bracket (upper bracket) 19 illustrated in FIG. 3B is attached to each of the end portions of the upper units 5 and 5. Together with the earthquake-resistant bolt 23, the upper earthquake-resistant bracket 19 and the lower earthquake-resistant bracket 21 constitute, between the upper unit 5 and the lower unit 7 as described later, an earthquake-resistant stopper 13 for regulating relative displacement with respect to the upper unit 5.

### - Earthquake-resistant stopper -

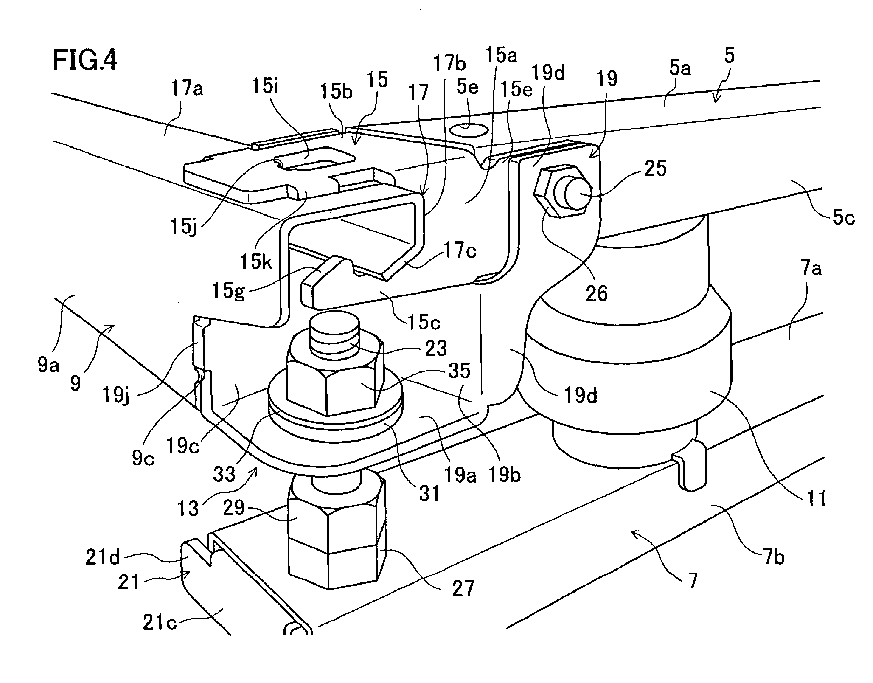

As illustrated in FIGS. 4 to 7 in an enlarged manner, the upper earthquake-resistant bracket 19 at the corner portion at the lower right position in FIG. 1A constitutes the earthquake-resistant stopper 13 in cooperation with the earthquake-resistant bolt 23 extending to an upside from the lower unit 7. The upper earthquake-resistant bracket 19 is formed by bending and welding of a steel plate, and includes a substantially rectangular floor wall portion 19a subjected to corner cut on the outside in the longitudinal direction and on an outside in the traverse direction, a vertical wall portion 19b standing to the upside from a side edge on an inside in the longitudinal direction of the floor wall portion 19a, and a side wall portion 19c standing to the upside from a side edge on the inside in the traverse direction of the floor wall portion 19a. The vertical wall portion 19b and the side wall portion 19c are continuous with each other at the side edges thereof being welded into a substantially L shape in plan view.

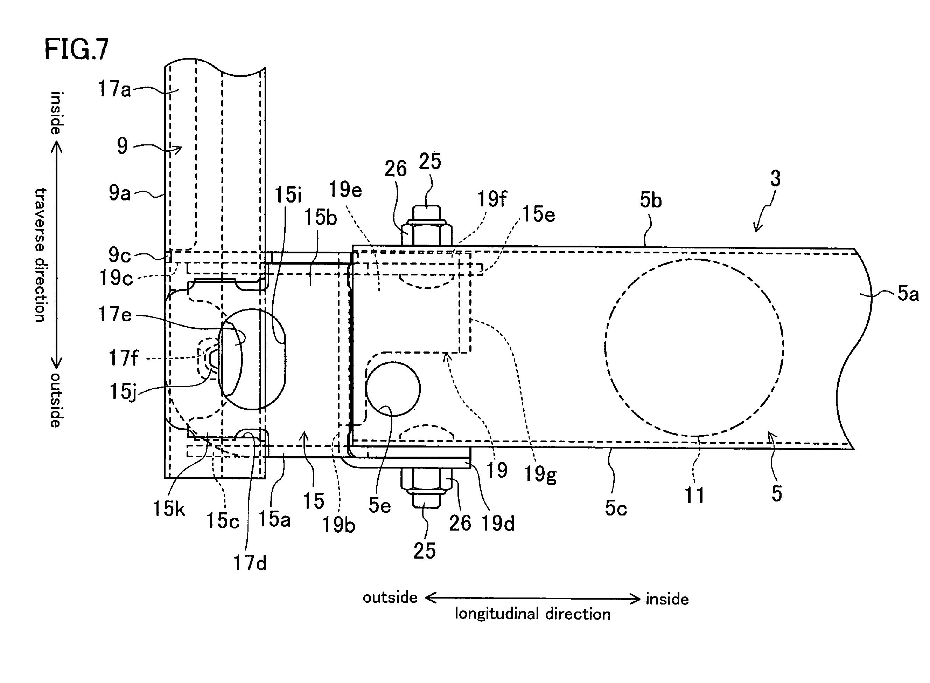

As illustrated in FIG. 7, the side wall portion 19c is provided with an inner extension portion 19f extending along an inner surface of a side wall 5b on the inside in the traverse direction of the upper unit 5. A screw hole 19h having a rectangular shape in cross-section and extending in the traverse direction is formed through the inner extension portion 19f. The inner extension portion 19f is fastened to the side wall 5b on the inside in the traverse direction of the upper unit 5 with a screw 25 inserted through the screw hole 19h and a nut 26 threadedly engaged therewith.

On an upper edge of the vertical wall portion 19b, there is formed an extension portion 19e bent along an end edge of a lower wall 5d of the upper unit 5 as an angular pipe and extending to the inside in the longitudinal direction along an upper surface of the lower wall 5d. A transverse wall portion 19g bent to the upside is formed on a side edge on the inside in the longitudinal direction of the extension portion 19e. The transverse wall portion 19g and the inner extension portion 19f are continuous with each other at side edges thereof being welded into a substantially L shape in plan view.

In addition, on a side edge on the outside in the traverse direction of the vertical wall portion 19b, there is formed an outer extension portion 19d bent to the inside in the longitudinal direction and extending along an outer surface of a side wall 5c on the outside in the traverse direction of the upper unit 5. Another screw hole 19h having a rectangular shape in cross-section and extending in the traverse direction is formed through the outer extension portion 19d. The outer extension portion 19d is fastened to the side wall 5c on the outside in the traverse direction of the upper unit 5 with another screw 25 inserted through the other screw hole 19h.

As illustrated in FIG. 3B, on the side wall portion 19c of the upper earthquake-resistant bracket 19, there is formed a protruding side 19j on a side edge on the outside in the longitudinal direction. As described later, the protruding side 19j is used for coupling to the beam member 9. Further, a bolt through-hole 19i extending in the vertical direction is formed in the floor wall portion 19a of the upper earthquake-resistant bracket 19. A shaft portion of the earthquake-resistant bolt 23 is inserted through the bolt through-hole 19i in a loose fitting state. The earthquake-resistant bolt 23 is arranged so that the shaft portion thereof extends to the upside while passing through the lower earthquake-resistant bracket 21 and the upper wall 7a of the lower unit 7 superimposed thereon. The earthquake-resistant bolt 23 is fastened to the upper wall 7a of the lower unit 7 with nuts 27 and 28 threadedly engaged with a root of the shaft portion.

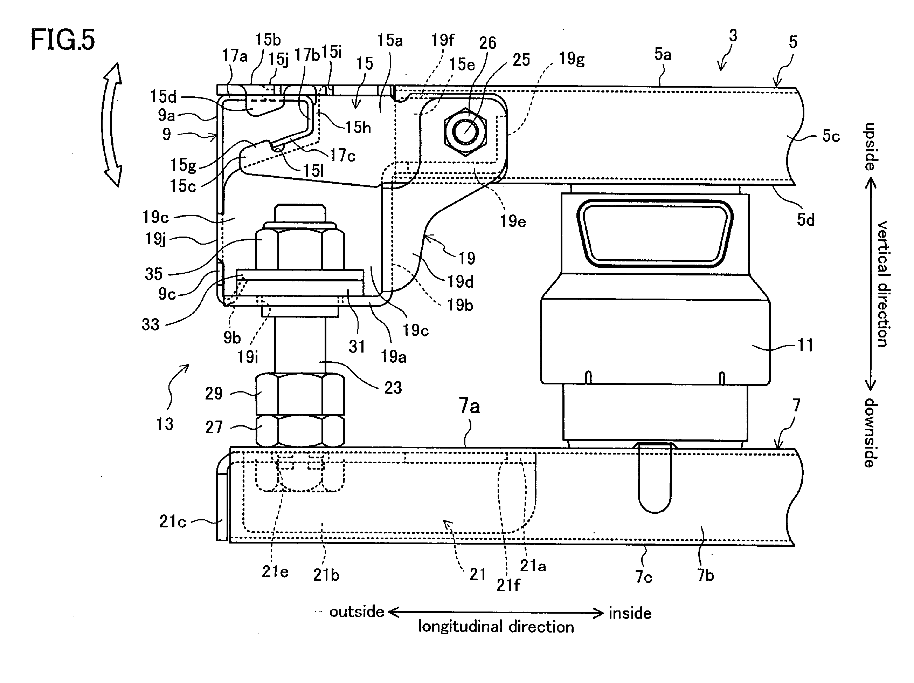

Further, as illustrated in FIG. 5, a rubber bush 31 is externally inserted to a part of the shaft portion of the earthquake-resistant bolt 23 which part is inserted into the bolt through-hole 19i of the floor wall portion 19a of the upper earthquake-resistant bracket 19. The rubber bush 31 includes a small cylindrical portion slightly smaller in diameter than the bolt through-hole 19i and a flange portion continuously provided thereon. The flange portion is held in contact from above with a peripheral edge portion of the bolt through-hole 19i. Further, a flat washer 33 is interposed on the flange portion so that a nut 35 is threadedly engaged with the shaft portion of the earthquake-resistant bolt 23.

That is, FIGS. 4 to 7 illustrate a state in which the flange portion of the rubber bush 31 is held in contact with the floor wall portion 19a of the upper earthquake-resistant bracket 19. The vibration isolator base 1 is not used in this state. When the vibration isolator base 1 is used, a position of the nut 35 is adjusted so that an appropriate clearance (approximately of from 2 to 3 mm) is formed between an upper surface of the flat washer 33 and a lower surface of the nut 35. With this structure, it is possible to appropriately regulate relative displacement in the vertical direction of the upper unit 5 and the lower unit 7 owing to an earthquake and the like.

In addition, even when the upper unit 5 and the lower unit 7 are subjected to relatively large relative displacement owing to an earthquake and the like, contact between the upper earthquake-resistant bracket 19 and the earthquake-resistant bolt 23 or the flat washer 33, that is, contact between metal members are avoided. Note that, a clearance between the floor wall portion 19a of the upper earthquake-resistant bracket 19 and the lower unit 7 therebelow is set, for example, approximately to 30 mm in consideration of an upper limit to which the upper unit 5 is allowed to incline.

Note that, a round hole is represented by reference symbol 5e shown in FIGS. 4 and 7 which round hole is formed through an upper wall 5a of the upper unit 5 so that an anchor bolt (not shown) for fixing the upper unit 5 to a bottom portion of the outdoor unit is allowed to pass therethrough.

### - Fitting structure of beam member -

In this embodiment, a guide member 15 illustrated in FIG. 3A is attached to the upper earthquake-resistant bracket 19 structured as described above, and both end portions in the traverse direction of the beam member 9 is fitted into the guide member 15. In this manner, firm coupling is achieved.

The guide member 15 is formed by bending of a steel plate, and includes two guide side-wall portions (first wall portions) 15a and 15a facing each other in the traverse direction, a guide top-wall portion (second wall portion) 15b coupling the guide side-wall portions 15a and 15a to each other at upper edges thereof and extending to a further outside in the longitudinal direction relative to side edges on the outside in the longitudinal direction of the guide side-wall portions 15a and 15a, and guide extension portions (third wall portions) 15c and 15c extending to the outside in the longitudinal direction from lower portions (substantially lower half) of the side edges on the outside in the longitudinal direction of the guide side-wall portions 15a and 15a.

The guide top-wall portion 15b is formed in a substantially rectangular shape, and positioned above the above-mentioned floor wall portion 19a of the upper earthquake-resistant bracket 19 such that an upper surface of the guide top-wall portion 15b is flush with an upper surface of the upper wall 5a of the upper unit 5. An opening portion 15i is formed through the guide top-wall portion 15b, and a fixture (not shown) used in a case of fastening the earthquake-resistant bolt 23 can be inserted from the opening portion 15i. Further, a punched-out portion (protruding portion) 15j protruding to the downside is formed in an edge portion on the outside in the longitudinal direction in which edge portion the opening portion 15i is defined. The punched-out portion 15j is formed at a position corresponding to that of a through-hole 17f described later of the beam member 9 so as to be fitted into the through-hole 17f.

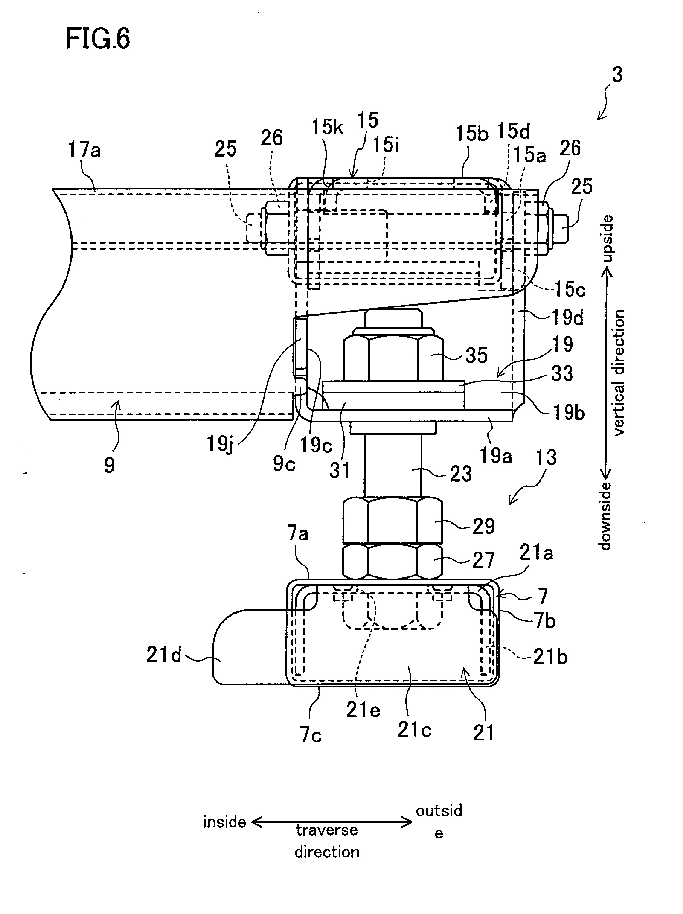

Further, on end portions on the outside in the longitudinal direction of the guide top-wall portion 15b, more specifically, on parts of the guide top-wall portion 15b which parts are superimposed on a top plate portion 17a described later of the beam member 9, there are formed guide projecting-wall portions (fourth wall portions) 15d and 15d bent to the downside at side edges on both sides in the traverse direction and extending to the downside through intermediation of round portions 15k and in the vertical direction. As illustrated in FIG. 6, the guide projecting-wall portions 15d and 15d are formed on the inside in the traverse direction of both the guide side-wall portions 15a and 15a.

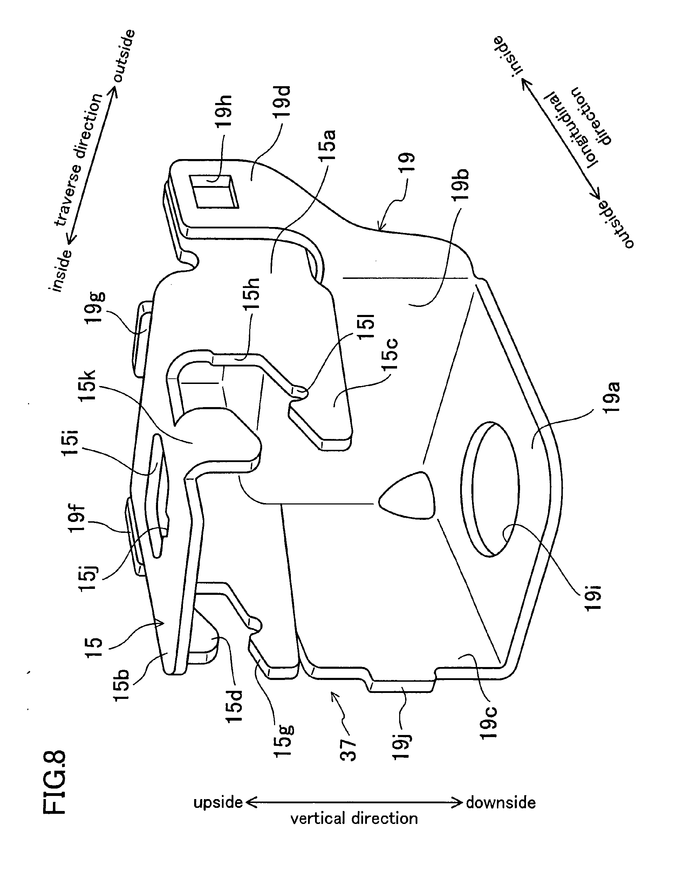

Each of the guide side-wall portions 15a and 15a is formed in a substantially rectangular shape, and protruding sides 15h and 15h are respectively formed on the side edges on the outside in the longitudinal direction (refer to FIG. 8). Further, on side edges on the inside in the longitudinal direction of the guide side-wall portions 15a and 15a, there are respectively formed attaching wall portions 15e and 15e extending along an inner surface of the side wall 5b on the inside in the traverse direction of the upper unit 5 and the outer surface of the side wall 5c on the outside. In the attaching wall portions 15e and 15e, there are respectively formed screw holes 15f and 15f extending in the traverse direction, and each having a rectangular shape in cross-section and being the same in shape and size as the screw holes 19h and 19h formed respectively in the inner extension portion 19f and the outer extension portion 19d of the upper earthquake-resistant bracket 19.

As illustrated in FIG. 8, the guide member 15 is attached to the upper earthquake-resistant bracket 19 in such a manner that the attaching wall portions 15e and 15e are sandwiched between the inner extension portion 19f and the outer extension portion 19d of the upper earthquake-resistant bracket 19 and that the screw holes 15f and 15f of the attaching wall portions 15e and 15e and the screw holes 19h and 19h of the inner extension portion 19f and the outer extension portion 19d are aligned with each other (overlap with each other seen in the traverse direction). As described above, by attachment of the guide member 15 formed by bending of a steel plate to the upper earthquake-resistant bracket 19 formed by bending and welding of a steel plate, each of the guide member 15 and the upper earthquake-resistant bracket 19 has a space structure excellent in rigidity and can be easily manufactured despite a complicated shape.

In a state in which the attaching wall portions 15e and 15e are sandwiched between the inner and outer extension portions 19f and 19d of the upper earthquake-resistant bracket 19, the guide member 15 is fastened, together with the upper earthquake-resistant bracket 19, to the side walls 5b and 5c of the upper unit 5 with the above-mentioned screws 25 inserted through the screw holes 15f and 19h and the nuts 26 threadedly engaged therewith, respectively. More specifically, as illustrated in FIG. 7, the attaching wall portions 15e and 15e are respectively fastened to the side walls 5b and 5c of the upper unit 5 in a state in which the inner extension portion 19f of the upper earthquake-resistant bracket 19 is sandwiched between an inner surface of the side wall 5b on the inside in the traverse direction of the upper unit 5 and an outer surface of the attaching wall portion 15e on the inside in the traverse direction of the guide member 15, and in a state in which the attaching wall portion 15e on the outside in the traverse direction of the guide member 15 is sandwiched between the outer surface of the side wall 5c on the outside in the traverse direction of the upper unit 5 and an inner surface of the outer extension portion 19d of the upper earthquake-resistant bracket 19.

The guide extension portions 15c and 15c have upper edges inclining to the downside toward the outside in the longitudinal direction, and stopper portions (engagement portions) 15g and 15g protruding to the upside are formed respectively on end portions on the outside in the longitudinal direction of the upper edges. Further, recessed portions 151 and 151 recessed to the downside are formed on the inside in the longitudinal direction of the stopper portions 15g and 15g on the upper edges of the guide extension portions 15c and 15c, respectively.

As described above, the guide extension portions 15c and 15c respectively extend to the outside in the longitudinal direction from the lower portions of the side edges on the outside in the longitudinal direction of the guide side-wall portions 15a and 15a. Thus, the guide side-wall portion 15a and the guide extension portion 15c exhibit a substantially L shape in cross-section seen in the traverse direction. Further, the guide top-wall portion 15b extends to the further outside in the longitudinal direction relative to side edges on the outside in the longitudinal direction of the guide side-wall portions 15a and 15a. Thus, as illustrated in FIG. 5, a lower surface of the guide top-wall portion 15b, the side edge on the outside in the longitudinal direction of the guide side-wall portion 15a, and the upper edge of the guide extension portion 15c exhibit a substantially C shape in cross-section seen in the traverse direction. By formation of the guide member 15 in such a manner, the guide top-wall portion 15b, the guide side-wall portion 15a, and the guide extension portion 15c constitute a fitting portion 37 which is open to the outside in the longitudinal direction and into which an attaching portion 17 described later of the beam member 9 is fitted.

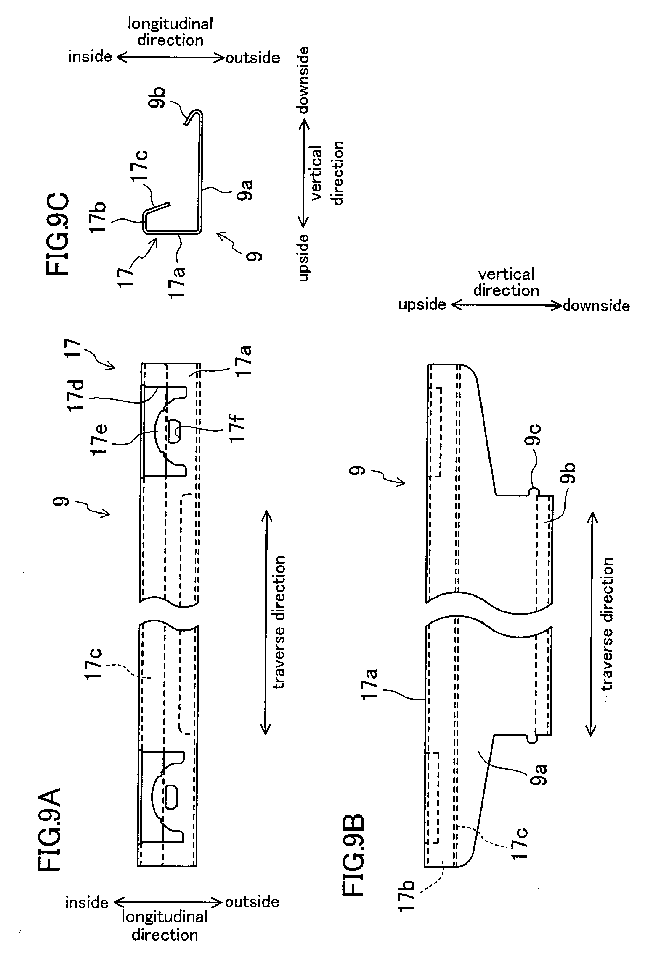

Meanwhile, the beam member 9 for coupling the pair of upper units 5 and 5 is formed by bending of a ZAM (registered trademark) steel plate. As illustrated in FIGS. 9A, 9B, and 9C, the beam member 9 includes a beam-member main body (fourth plate portion) 9a being arranged on the outside in the longitudinal direction of the guide member 15 and extending in the traverse direction and the attaching portion 17 projectingly provided from an upper edge of the beam-member main body 9a to the inside in the longitudinal direction so as to be fitted into the fitting portion 37.

As illustrated in FIG. 9B, the beam-member main body 9a is formed in a substantially T shape, and has a folded-back portion 9b formed at a lower edge thereof by being folded to a diagonal upside so that higher rigidity is achieved. Further, on side edges on both outsides in the traverse direction on a lower end portion of the beam-member main body 9a, there are respectively formed protruding pieces 9c and 9c protruding to both the outsides in the traverse direction. The protruding pieces 9c and 9c are configured to hit against the side edge on the outside in the longitudinal direction of the side wall portion 19c of the upper earthquake-resistant bracket 19 in a state in which the beam member 9 is attached to the upper unit 5. Note that, by hitting of an upper edge of the protruding piece 9c against a lower end of the protruding side 19j formed on the side edge of on the outside in the longitudinal direction of the side wall portion 19c of the upper earthquake-resistant bracket 19, the beam member 9 is more easily positioned in the vertical direction when being fitted into the guide member 15.

The attaching portion 17 includes the top plate portion (first plate portion) 17a bent at the upper edge of the beam-member main body 9a and extending to the inside in the longitudinal direction, a vertical plate portion (second plate portion) 17b extending to the downside from a side edge on the inside in the longitudinal direction of the top plate portion 17a, and an inclined plate portion (third plate portion) 17c extending from a lower edge of the vertical plate portion 17b in a manner of inclining to the downside toward the outside in the longitudinal direction. Note that, an angle formed between the top plate portion 17a and the beam-member main body 9a is set to be lower than an angle formed between the guide top-wall portion 15b and a side edge on the outside in the longitudinal direction of the side wall portion 19c of the upper earthquake-resistant bracket 19 (end on the outside in the longitudinal direction of the upper unit 5) seen in the traverse direction. Further, an angle formed between the top plate portion 17a and the inclined plate portion 17c is set to be higher than an angle formed between the lower surface of the guide top-wall portion 15b and the upper edge of the guide extension portion 15c.

As described above, the top plate portion 17a, the vertical plate portion 17b, and the inclined plate portion 17c exhibit a substantially C shape in cross-section seen in the traverse direction, and the inclined plate portion 17c inclines to the downside toward the outside in the longitudinal direction. Thus, elastic deformation is easily effected mainly in the vertical direction.

As illustrated in FIG. 9A, at positions corresponding to the guide projecting-wall portions 15d and 15d on the top plate portion 17a, there are formed two cutout groove portions (groove portions) 17d and 17d extending in the longitudinal direction and open to the inside in the longitudinal direction. A tongue-like portion 17e sandwiched between the cutout groove portions 17d and 17d is formed in a semicircular shape in plan view such that the guide projecting-wall portions 15d and 15d are not hooked when the attaching portion 17 is fitted into the fitting portion 37. The through-hole 17f is formed in the tongue-like portion 17e (part overlapped with the guide top-wall portion 15b).

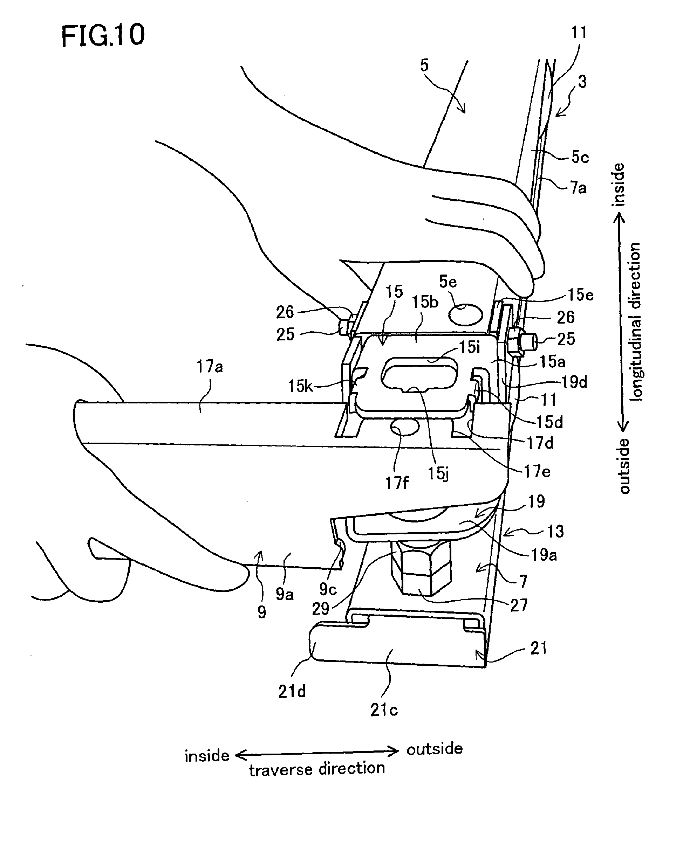

As illustrated in FIG. 10, the attaching portion 17 thus formed is fitted into the fitting portion 37 from the outside in the longitudinal direction while a side edge on the inside in the traverse direction of the cutout groove portion 17d on the inside in the traverse direction is hit against the guide projecting-wall portion 15d on the inside in the traverse direction and while a side edge on the outside in the traverse direction of the cutout groove portion 17d on the outside in the traverse direction is hit against the guide projecting-wall portion 15d on the outside in the traverse direction. As a result, through intermediation of the inclined plate portion 17c coming into contact with the stopper portion 15g, the attaching portion 17 is fitted into the fitting portion 37 while being elastically deformed mainly in the vertical direction.

Then, the inclined plate portion 17c climbs over the stopper portion 15g as a result striking the beam member 9 with a mallet or the like. As a result, the attaching portion 17 is fitted into the fitting portion 37 in a state in which contact is made in the following pairs: an upper surface of the top plate portion 17a and the lower surface of the guide top-wall portion 15b, a surface on the inside in the longitudinal direction of the vertical plate portion 17b and the side edge on the outside in the longitudinal direction of the guide side-wall portion 15a, and a lower surface of the inclined plate portion 17c and the upper edge of the guide extension portion 15c. In this case, the inclined plate portion 17c is sandwiched between the stopper portion 15g and the guide side-wall portion 15a such that an end on the outside in the longitudinal direction of the inclined plate portion 17c is hooked to the stopper portion 15g. Simultaneously, the protruding pieces 9c and 9c of the beam-member main body 9a are hit against the side edge of the side wall portion 19c of the upper earthquake-resistant bracket 19.

Further, the guide projecting-wall portions 15d and 15d respectively move into the two cutout groove portions 17d and 17d, and the side edge on the inside in the traverse direction of the cutout groove portion 17d on the inside in the traverse direction climbs onto the round portion 15k of the guide projecting-wall portion 15d on the inside in the traverse direction. Meanwhile, the side edge on the outside in the traverse direction of the cutout groove portion 17d on the outside in the traverse direction climbs onto the round portion 15k of the guide projecting-wall portion 15d on the outside in the traverse direction. In addition, the punched-out portion 15j formed in the guide top-wall portion 15b is fitted into the through-hole 17f of the top plate portion 17a.

By fitting of the attaching portion 17 into the fitting portion 37 in such a manner, loose-fitting caused by the moment acting in directions of the hollow arrows of FIG. 5 is regulated between the beam member 9 and the guide member 15. This is because, as described above, the angle formed between the top plate portion 17a and the inclined plate portion 17c is set to be higher than the angle formed between the lower surface of the guide top-wall portion 15b and the upper edge of the guide extension portion 15c. Thus, the top plate portion 17a presses the lower surface of the guide top-wall portion 15b to the upside and the inclined plate portion 17c presses the upper end edge of the guide extension portion 15c to the downside.

Further, the side edge on the inside in the traverse direction of the cutout groove portion 17d on the inside in the traverse direction climbs onto the round portion 15k of the guide projecting-wall portion 15d on the inside in the traverse direction, and the side edge on the outside in the traverse direction of the cutout groove portion 17d on the outside in the traverse direction climbs onto the round portion 15k of the guide projecting-wall portion 15d on the outside in the traverse direction. Thus, the top plate portion 17a is pressed against the lower surface of the guide top-wall portion 15b, and hence relative movement of the beam member 9 and the guide member 15 is regulated in the vertical direction.

Still further, the top plate portion 17a and the guide top-wall portion 15b are held in strong and close contact with each other as just described, and the angle formed between the top plate portion 17a and the beam-member main body 9a is set to be lower than an angle formed between the guide top-wall portion 15b and the side edge on the outside in the longitudinal direction of the side wall portion 19c of the upper earthquake-resistant bracket 19 seen in the traverse direction. Thus, the protruding pieces 9c and 9c of the beam-member main body 9a presses the side wall portion 19c in a fastening manner. In other words, the beam member 9 is attached to the upper unit 5 exactly as the top plate portion 17a and the beam-member main body 9a sandwich the end portion of the upper unit 5 from the upside and the outside in the longitudinal direction. Thus, the loose-fitting caused by the moment acting in the directions of the hollow arrows of FIG. 5 is further regulated between the beam member 9 and the guide member 15.

In this way, a first regulating means of the present invention for regulating a backlash in the vertical direction between the beam member 9 and the upper unit 5 (loose-fitting caused by relative movement and moment forces of the beam member 9 and the guide member 15) is constituted by the following: the guide top-wall portion 15b, the top plate portion 17a pressing the guide top-wall portion 15b, the guide extension portion 15c, the inclined plate portion 17c pressing the guide extension portion 15c, the side wall portion 19c of the upper earthquake-resistant bracket 19, the protruding piece 9c of the beam-member main body 9a pressing the side wall portion 19c, the guide projecting-wall portions 15d and 15d, and the cutout groove portions 17d and 17d climbing onto the round portions 15k and 15k of the guide projecting-wall portions 15d and 15d.

Meanwhile, as a result of fitting of the attaching portion 17 into the fitting portion 37, the end on the outside in the longitudinal direction of the inclined plate portion 17c is hooked to (engaged with) the stopper portions 15g and 15g. In addition, the protruding sides 15h and 15h formed on the side edges on the outside in the longitudinal direction of the guide side-wall portions 15a and 15a press the vertical plate portion 17b. Thus, relative movement of the beam member 9 and the upper unit 5 is regulated in the longitudinal direction.

Further, as a result of fitting of the punched-out portion 15j formed in the guide top-wall portion 15b into the through-hole 17f of the top plate portion 17a, the relative movement of the beam member 9 and the upper unit 5 is further regulated in the longitudinal direction.

In this way, a second regulating means of the present invention for regulating the backlash in the longitudinal direction between the beam member 9 and the upper unit 5 is constituted by the following: the stopper portions 15g and 15g, the inclined plate portion 17c pressing the stopper portions 15g and 15g, the guide side-wall portions 15a and 15a (protruding sides 15h and 15h), the vertical plate portion 17b pressing the guide side-wall portions 15a and 15a, the through-hole 17f, and the punched-out portion 15j fitted into the through-hole 17f.

In addition, the side edge on the inside in the traverse direction of the cutout groove portion 17d on the inside in the traverse direction climbs onto the round portion 15k of the guide projecting-wall portion 15d on the inside in the traverse direction, and the side edge on the outside in the traverse direction of the cutout groove portion 17d on the outside in the traverse direction climbs onto the round portion 15k of the guide projecting-wall portion 15d on the outside in the traverse direction. Thus, the top plate portion 17a is pressed by the guide projecting-wall portion 15d to the inside and outside in the traverse direction, and hence relative movement of the beam member 9 and the upper unit 5 is regulated in the traverse direction.

In this way, a third regulating means of the present invention for regulating a backlash in the traverse direction between the beam member 9 and the upper unit 5 is constituted by the guide projecting-wall portions 15d and 15d and the cutout groove portions 17d and 17d.

In addition, by adoption of the structure in which the guide projecting-wall portions 15d and 15d are fittingly inserted into the cutout groove portions 17d and 17d extending in the longitudinal direction, unlike, for example, a structure in which a projection-like portion is fitted in a recess-like portion, an angle formed between the unit 3 and the beam member 9 is less liable to change in plan view. Thus, the vibration isolator base 1 formed in a rectangular shape is prevented from being deformed into a parallelogram shape.

Note that, in order to disassemble the assembled vibration isolator base 1, for example, an elongated tool such as a screwdriver is inserted into a recessed portion 151 formed on the inside in the longitudinal direction of the stopper portion 15g on the upper edge of each of the guide extension portions 15c and 15c. Then, when a handle portion of the tool is pushed down while a lower edge of the recessed portion 151 as a fulcrum, the inclined plate portion 17c is pushed to the upside by a distal end portion of the tool. As a result, the end on the outside in the longitudinal direction of the inclined plate portion 17c and the stopper portion 15g are disengaged from each other.

After that, when the beam member 9 is pulled to the outside in the longitudinal direction in the state in which the inclined plate portion 17c and the stopper portion 15g are disengaged from each other, the attaching portion 17 is easily detached from each of the fitting portions 37. As described above, although facilitating not only an assembly operation but also a disassembly operation, the vibration isolator base 1 according to this embodiment is not easily disassembled unless the inclined plate portion 17c and the stopper portion 15g are intentionally disengaged from each other by insertion of the tool into the recessed portion 151.

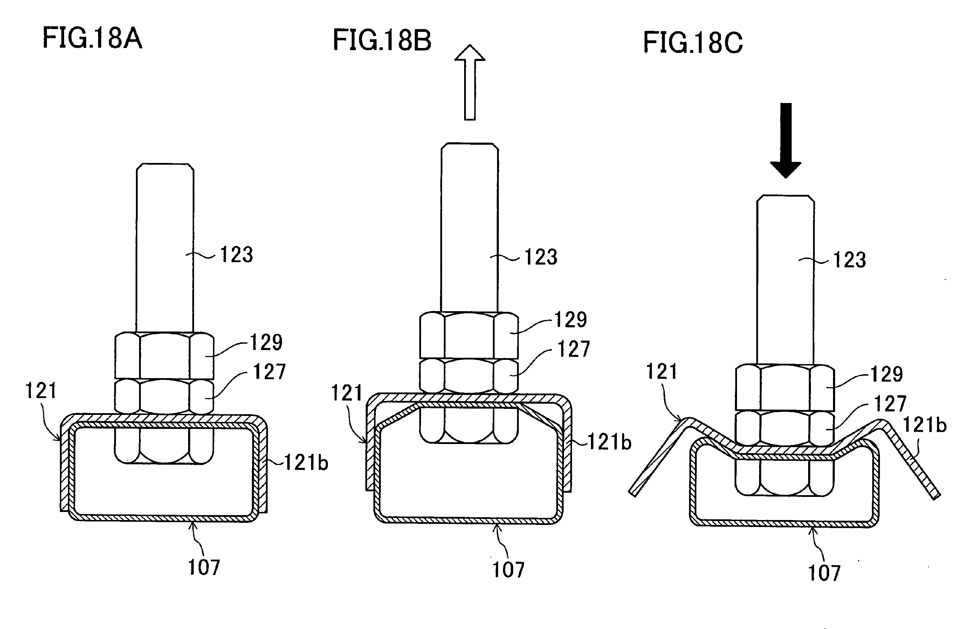

Incidentally, a conventional structure in which a lower earthquake-resistant bracket 121 is fittingly attached from an outside to an end portion of a lower unit 107 (refer to FIG. 18A) has the following problems. That is, when a force of pulling a shaft member 123 to an upside acts (when a pulling force is applied to an upper unit (not shown)) as indicated by the hollow arrow of FIG. 18B, the lower earthquake-resistant bracket 121 is displaced to the upside without deformation. Meanwhile, only the lower unit 107 is largely deformed in a tapered manner to the upside. In contrast, when a force of pushing-in the shaft member 123 to a downside (when a downward compressive force is applied to the upper unit or when a horizontal shearing force acts on the upper unit so that the shaft member 123 inclines and is pushed-in to a diagonal downside) as indicated by the solid arrow of FIG. 18C, there is a risk that a leg portion 121b of the lower earthquake-resistant bracket 121 is deformed in an expanding manner and the lower unit 107 is largely deformed in a manner of being crushed to the downside. Note that, nuts for fixing the shaft member 123 to the lower earthquake-resistant bracket 121 and the lower unit 107 are denoted by reference numerals 127 and 129 in FIGS. 18A, 18B, and 18C.

In other words, in the structure in which the lower earthquake-resistant bracket 121 is fittingly attached from the outside to the end portion of the lower unit 107, the lower earthquake-resistant bracket 121 and the lower unit 107 are independently deformed (exhibit deformation behaviors different from each other) even with use of a lower earthquake-resistant bracket 121 of higher rigidity in order to increase strength of the lower unit 107. Thus, there is a problem in that the lower earthquake-resistant bracket 121 is difficult to serve as a reinforcement member.

In this context, in order to suppress excessive deformation of the lower unit, for example, it is possible to extremely increase a thickness of the lower unit or to increase second moment of area of the cross-section with provision of many ribs or the like. However, such a structure has problems of increases in weight of vibration isolator base and the number of worker-hours

In this regard, in the vibration isolator base 1 according to this embodiment, as illustrated in FIG. 11A, the lower earthquake-resistant bracket 21 including the top wall portion 21a and the side wall portions 21b and 21b and formed in the substantially C shape in cross-section, that is, open to the downside is fittingly attached to the inside of the lower unit 7 constituted by an angular pipe member and close in cross-section. Thus, when the following act on the upper unit 5: a high force that the floor wall portion 19a of the upper earthquake-resistant bracket 19 pushes to the upside the nut 35 threadedly engaged with the earthquake-resistant bolt 23 through intermediation of the flange portion and flat washer 33 of the rubber bush 31; and a high force that the floor wall portion 19a pushes to the downside or the diagonal downside the nuts 27 and 29 threadedly engaged with the earthquake-resistant bolt 23, the lower earthquake-resistant bracket 21 and the lower unit 7 exhibit the following behaviors.

That is, as indicated by the hollow arrow of FIG. 11B, when a force of pulling the earthquake-resistant bolt 23 to the upside in such a case where a pulling force is applied to the upper unit 5, the lower unit 7 should be deformed in a tapered manner to the upside. In this case, when the upper wall 7a of the lower unit 7 is bent into a substantially dog-leg shape, the upper wall 7a comes into close contact with the top wall portion 21 a of the lower earthquake-resistant bracket 21. As a result, the top wall portion 21a is bent in a substantially dog-leg shape in accordance therewith, and deformation behaviors of the lower earthquake-resistant bracket 21 and the lower unit 7 substantially conform to each other. As just described, it is necessary to deform the lower earthquake-resistant bracket 21 as well in order to taper the lower unit 7 to the upside. Thus, a high pulling force is required in comparison with that in the above-mentioned case illustrated in FIG. 18B where the lower earthquake-resistant bracket 121 and the lower unit 107 exhibit deformation behaviors different from each other (case where only the lower unit 107 is deformed). As a result, it is possible to obtain high durability against a force applied to the lower earthquake-resistant bracket 21 and the lower unit 7, and hence possible to suppress excessive deformation of the lower unit 7 with a simple structure.

Note that, when the upper wall 7a of the lower unit 7 is bent into a substantially dog-like shape, the top wall portion 21a of the lower earthquake-resistant bracket 21 is bent into a substantially dog-like shape in accordance therewith. Thus, although the side walls 7b and 7b of the lower unit 7 and the side wall portions 21b and 21b of the lower earthquake-resistant bracket 21 do not immediately come into contact with each other, when not only the upper wall 7a of the lower unit 7 and the top wall portion 21a of the lower earthquake-resistant bracket 21 but also the side walls 7b and 7b of the lower unit 7 and the side wall portions 2 1 b and 21b of the lower earthquake-resistant bracket 21 come into close contact as a result of progress of deformation of the lower unit 7 and the lower earthquake-resistant bracket 21, subsequent deformation of the lower unit 7 is further prevented.

Meanwhile, as indicated by the solid arrow of FIG. 11C, when a force of pushing-in the earthquake-resistant bolt 23 to the downside acts in such a case where a downward compressive force is applied to the upper unit 5 or a case where a horizontal shearing force acts on the upper unit 5 so that the earthquake-resistant bolt 23 inclines and is pushed-in to a diagonal downside, both the side wall portions 2 1 b and 21b of the lower earthquake-resistant bracket 21 which have the lower ends separated from each other should be deformed in a manner of opening in the traverse direction. In this case, both the lower ends of the side wall portions 21b and 21b of the lower earthquake-resistant bracket 21 expand in the traverse direction, the side wall portions 21b and 21b come into close contact with the side walls 7b and 7b of the lower unit 7, with the result that the deformation behaviors of the lower earthquake-resistant bracket 21 and the lower unit 7 substantially conform to each other. As just described, in order to open both the side wall portions 21b and 21b of the lower earthquake-resistant bracket 21 in the traverse direction, the lower unit 7 close in cross-section (lower ends of the side walls 7b and 7b are connected to each other) has to be deformed as well. Thus, a high pushing-in force is required in comparison with that in the above-mentioned case illustrated in FIG. 18C where the lower earthquake-resistant bracket 121 and the lower unit 107 exhibit deformation behaviors different from each other (case where the lower earthquake-resistant bracket 121 is deformed more largely than the lower unit 107). As a result, it is possible to obtain high durability against a force applied to the lower earthquake-resistant bracket 21 and the lower unit 7, and hence possible to suppress excessive deformation of the lower unit 7 with a simple structure.

According to this embodiment, by fitting of the beam member 9 into the fitting portions 37 and 37 provided at both the end portions of the pair of the upper units 5 and 5, the pair of upper units 5 and 5 are coupled to each other, and hence the vibration isolator base 1 can be easily assembled. Further, weight reduction can be achieved a rectangular frame shape formed with use of only the upper units 5 and 5 together with the beam members 9 and 9. Still further, convenience during transportation and in an off-the-shelf state is enhanced by adoption of such a structure that allows disassembly.

With those advantages, when an air-conditioner outdoor unit is installed, for example, on the roof of a building, members can be separately carried to the roof with human power, and hence it is unnecessary to use a truck crane and the like. Thus, it is unnecessary to pay rental fees of the truck crane and the like or to secure installation spaces for the same. As a result, economic efficiency and construction efficiency are further enhanced.

In addition, the vibration isolator base 1 includes the first to third regulating means for respectively regulating backlashes in the vertical direction, the longitudinal direction, and the traverse direction between the beam member 9 and the upper unit 5. Thus, the vibration isolator base 1 can be easily assembled, and at the same time, the backlashes between the beam member 9 and the upper unit 5 can be suppressed.

The above example achieves a reduction in weight and size of the vibration isolator base. Further, the vibration isolator base can be easily assembled, and at the same time, backlashes therein can be suppressed. In addition, the backlashes of the vibration isolator base 1 can be suppressed with a simple structure. Thus, it does not take a long period of time to manufacture the beam member 9 and the upper unit 5, or manufacturing costs thereof do not increase, which leads to cost reduction and quick delivery.

In addition, according to this embodiment, the deformation behaviors of the lower earthquake-resistant bracket 21 and the lower unit 7 substantially conform to each other. Thus, the lower earthquake-resistant bracket 21 and the lower unit 7 exert higher cross-sectional performance (section modulus, second moment of area, and the like) than that in the case of exhibiting deformation behaviors different from each other. Thus, it is possible to obtain high durability against a force applied to those components through intermediation of the earthquake-resistant bolt 23.

Thus, even when a high force is applied to the upper unit 5, excessive deformation of the lower unit 7 can be suppressed with a simple structure.

Further, the lower unit 7 is supported with higher stability by formation of the jettied portion 21d functions as a diagonal brace member on the transverse wall portion 21c. Thus, at the time of installation, it is possible to prevent falling of the one of the units 3 and 3 which has not yet been coupled by the beam member 9 to the other of the units 3 and 3 as a counterpart. In addition, after completion of assembly of the vibration isolator base 1, it is possible to prevent unstableness and the like of the lower unit 7, and hence to prevent the vibration isolator base 1 as a whole from being twisted.

Still further, the lower earthquake-resistant bracket 21 is formed not only in a substantially C shape in cross-section seen in the longitudinal direction in which the lower unit 7 extends, but also in a substantially L shape in cross-section seen in the traverse direction. Thus, the cross-sectional performance of the lower earthquake-resistant bracket 21 is enhanced, and hence it is possible to obtain high durability against the force applied through intermediation of the earthquake-resistant bolt 23.

### (Second embodiment)

This embodiment is different from the first embodiment in the shape of the beam member 9 and in that a fixing member 39 is substituted for the punched-out portion 15j. In the following, description is made of the differences with respect to the first embodiment.

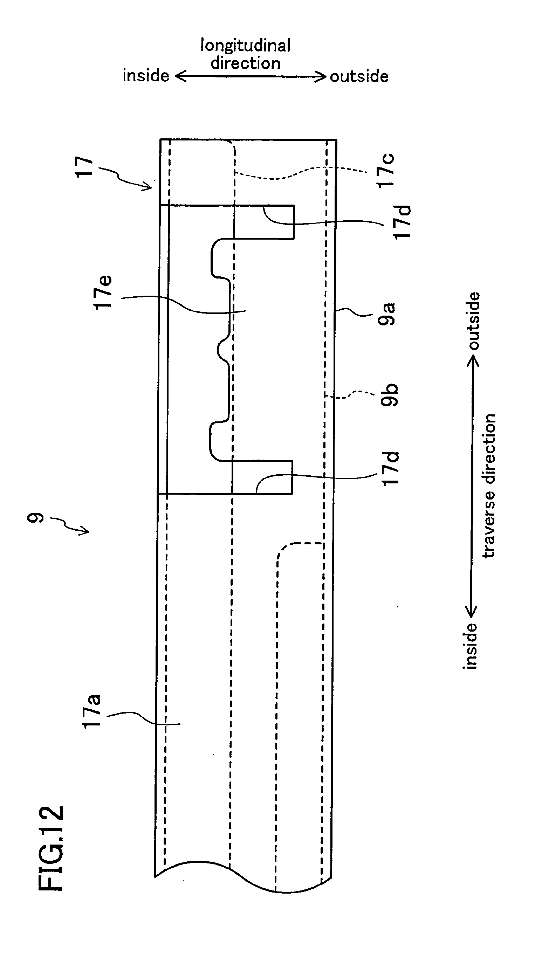

As illustrated in FIG. 12, in order to avoid interference with the fixing member 39, the tongue-like portion 17e of the top plate portion 17a of the beam member 9 is formed not in a semicircular shape but in a substantially rectangular shape such that the side edge in the longitudinal direction thereof is positioned on the outside in the longitudinal direction in comparison with that in the first embodiment. Further, the punched-out portion 15j is not formed to the guide member 15, and accordingly, the through-hole 17f into which the punched-out portion 15j is fitted is not formed in the top plate portion 17a.

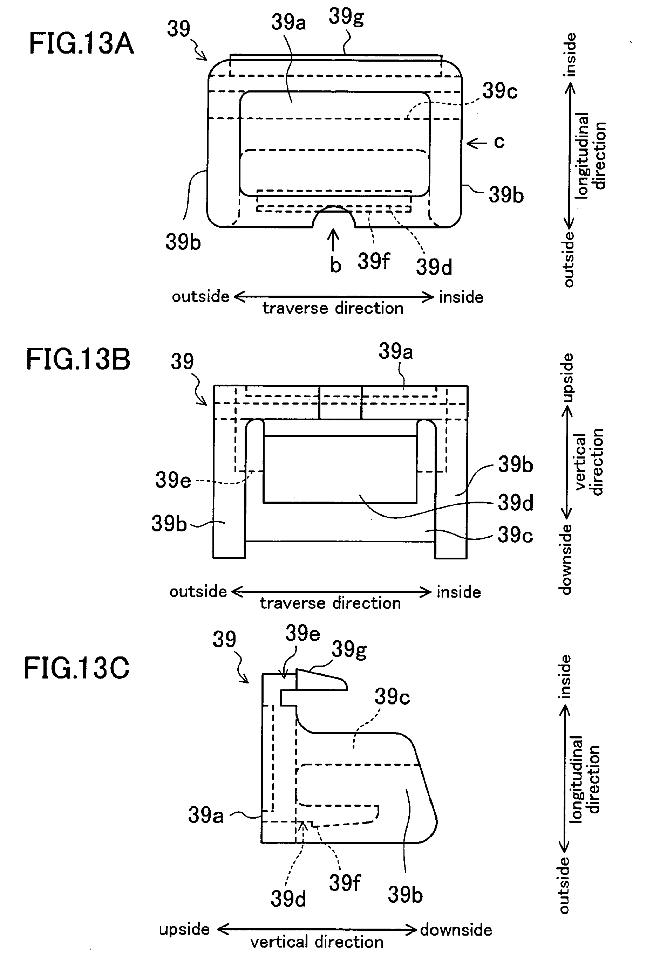

The fixing member 39 is a resin-molded product, and includes the following as illustrated in FIGS. 13A, 13B, and 13C: a substantially rectangular top wall portion 39a; side wall portions 39b and 39b extending to the downside from portions on the outside in the longitudinal direction on side edges on both sides in the traverse direction of the top wall portion 39a; a first vertical wall portion 39c extending to the downside from a central portion of a lower surface of the top wall portion 39a; a second vertical wall portion 39d extending, on the outside relative to the first vertical wall portion 39c in the longitudinal direction, to the downside from the lower surface of the top wall portion 39a in a manner of being sandwiched between both the side wall portions 39b and 39b; and a third vertical wall portion 39e extending, on the inside relative to the first vertical wall portion 39c in the longitudinal direction, to the downside from the lower surface of the top wall portion 39a.

The side wall portions 39b and 39b are connected to each other at side edges thereof by the first vertical wall portion 39c, and each include lower edges inclining in a manner of extending to the downside toward the outside in the longitudinal direction, and are each formed in a substantially trapezoidal shape seen in the traverse direction. Further, both the second vertical wall portion 39d and the third vertical wall portion 39e are formed in substantially rectangular shapes seen in the longitudinal direction, and a stepped portion 39f projecting to the outside in the longitudinal direction is formed to the second vertical wall portion 39d. Meanwhile, a stepped portion 39g projecting to the inside in the longitudinal direction is formed to the third vertical wall portion 39e.

Note that, the stepped portion 39f of the second vertical wall portion 39d is positioned to be lower than the stepped portion 39g of the third vertical wall portion 39e. Further, lower potions relative to the stepped portions 39f and 39g of the second vertical wall portion 39d and the third vertical wall portion 39e are formed in formed in wedge-like shapes seen in the traverse direction.

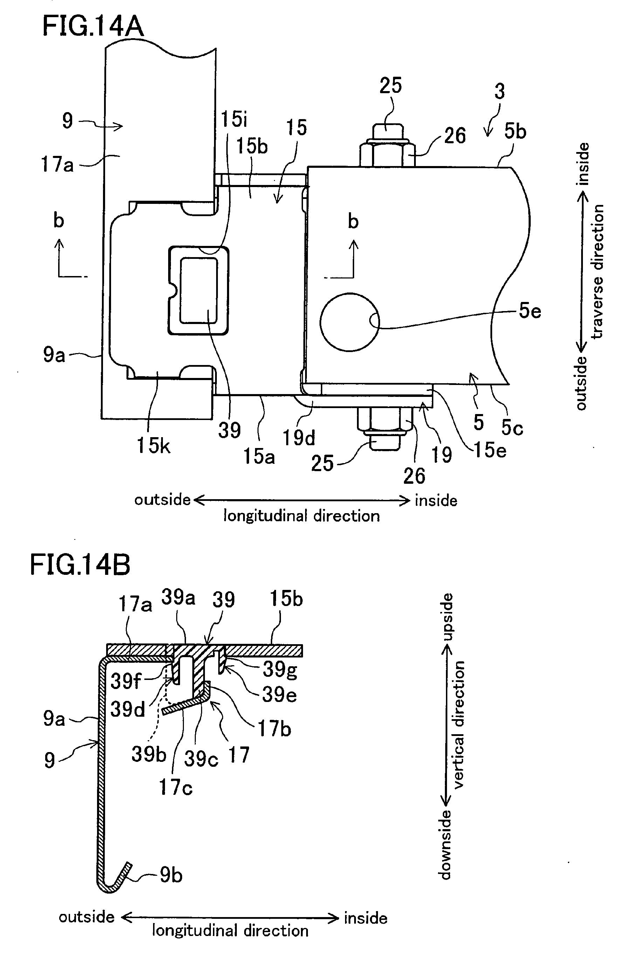

After the attaching portion 17 of the beam member 9 is fitted to the fitting portion 37 of the guide member 15, as illustrated in FIG. 14A, the fixing member 39 is fitted from the upside into the above-mentioned opening portion 15i formed in the guide top-wall portion 15b. As just described, when the fixing member 39 is fitted into the opening portion 15i, as illustrated in FIG. 14B, the stepped portion 39f of the second vertical wall portion 39d is engaged with a side edge on the inside in the longitudinal direction of the tongue-like portion 17e of the top plate portion 17a of the beam member 9. Simultaneously, the stepped portion 39g of the third vertical wall portion 39e is engaged with a side edge on the inside in the longitudinal direction defining the opening portion 15i (guide top-wall portion 15b). With this structure, the fixing member 39 is not easily detached from the guide member 15.

Further, in a state in which the fixing member 39 is fitted in the opening portion 15i, the vertical plate portion 17b of the beam member 9 is engaged with the first vertical wall portion 39c of the fixing member 39. Thus, movement of the beam member 9 to the outside in the longitudinal direction is regulated. In addition, in the state in which the fixing member 39 is fitted in the opening portion 15i, the lower edge of each of the side wall portions 39b and 39b which inclines to the outside in the longitudinal direction and the downside is fitted to an upper surface of the inclined plate portion 17c which inclines to the outside in the longitudinal direction and the downside, and presses the same to the downside. Thus, the attaching portion 17 and the fitting portion 37 are more firmly fastened to each other in the vertical direction.

According to this embodiment, the fixing member 39 is engaged with the beam member 9 by being fitted to the fitting portion 37 from the upside, and hence the backlash in the longitudinal direction between the beam member 9 and the upper unit 5 can be more reliably regulated. In addition, the lower edges of the side wall portions 39b and 39b of the fixing member 39 fitted to the fitting portion 37 press the inclined plate portion 17c to the downside, and hence the backlash also in the vertical direction between the beam member 9 and the upper unit 5 can be more reliably regulated.

### (Third embodiment)

A fixing member 41 according to this embodiment is different in shape from the fixing member 39 according to the second embodiment. In the following, description is made of the difference with respect to the second embodiment.

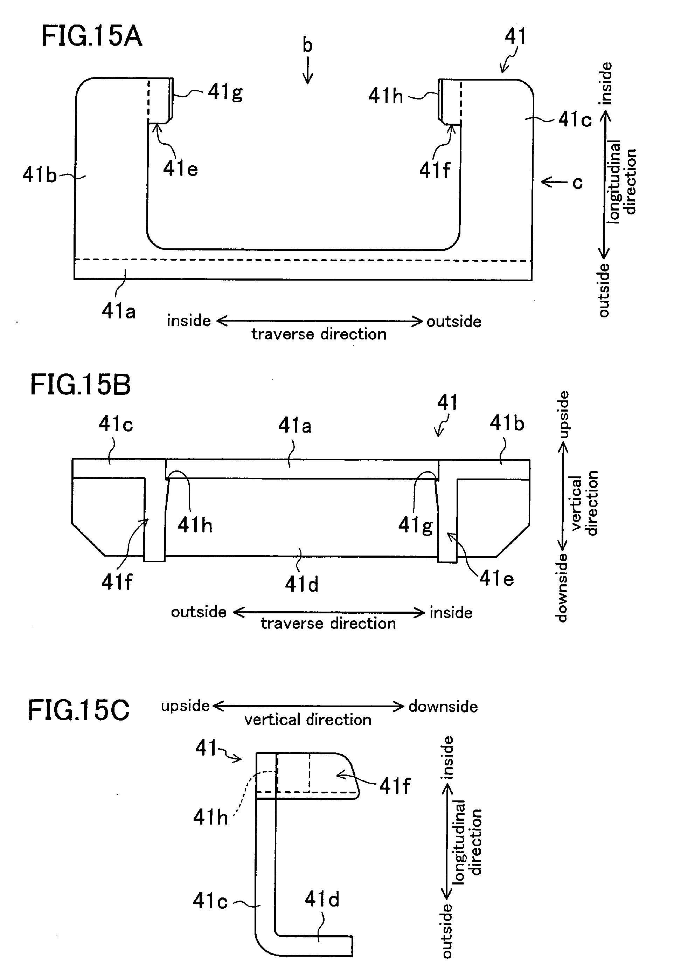

The fixing member 41 is a resin-molded product, and includes the following as illustrated in FIGS. 15A, 15B, and 15C: a top wall portion formed in a C shape, that is, open to the inside in the longitudinal direction consisting of a proximal end portion 41 a extending in the traverse direction and arm plate portions 41b and 41c extending to the inside from in the longitudinal direction from both end portions in the traverse direction of the proximal end portion 41a; a vertical wall portion 41d extending to the downside from a side edge on the outside in the longitudinal direction of the proximal end portion 41 a; and side wall portions 41e and 41f extending to the downside from an end portion of a side edge on the outside in the traverse direction of the arm plate portion 41b on the inside in the traverse direction and an end portion of a side edge on the inside in the traverse direction of the arm plate portion 41c on the outside in the traverse direction, both the end portions being on the inside in the longitudinal direction. The fixing member 41 is formed so as to exhibit a C shape seen also in the traverse direction.

Each of the side wall portions 41e and 41f has a lower edge inclining in a manner of extending to the downside toward the outside in the longitudinal direction, and is formed in a substantially trapezoidal shape seen in the traverse direction. Further, on surfaces of both the side wall portions 41e and 41f facing each other, stepped portions 41g and 41h projecting respectively to the outside and inside in the traverse direction are formed at positions slightly lower than the lower surface of the top wall portion.

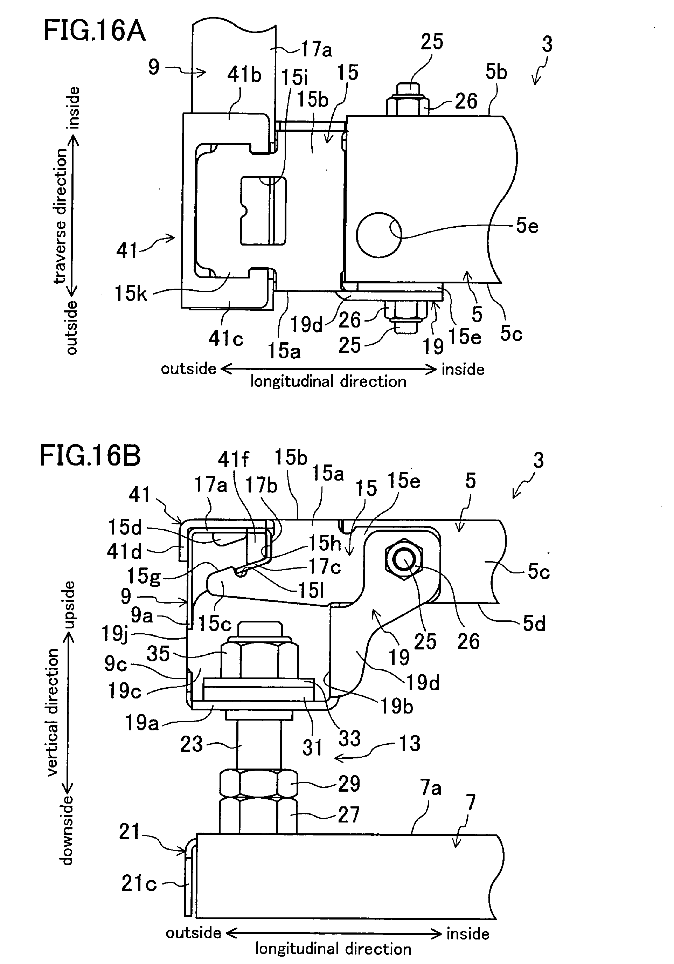

After the attaching portion 17 of the beam member 9 is fitted to the fitting portion 37 of the guide member 15, as illustrated in FIG. 16A, the fixing member 41 is fitted from the upside to a position between the guide side-wall portion 15a and the guide projecting-wall portion 15d in the longitudinal direction, and between both the side edges in the traverse direction of the cutout groove portions 17d and 17d in the traverse direction and both side edges in the traverse direction of the guide top-wall portion 15b. When the fixing member 41 is fitted as just described above, as illustrated in FIG. 16B, the stepped portion 41g of the side wall portion 4 1 e on the inside in the traverse direction is engaged from the downside with the side edge on the inside in the traverse direction of the guide top-wall portion 15b. Simultaneously, the stepped portion 41h of the side wall portion 41f on the outside in the traverse direction is engaged from the downside with the side edge on the outside in the traverse direction of the guide top-wall portion 15b. With this structure, the fixing member 41 is not easily detached from the guide member 15.

Further, in a fitting state of the fixing member 41, the vertical plate portion 41d of the fixing member 41 is engaged with an upper end portion of the beam-member main body 9a from the outside in the longitudinal direction. Thus, the movement of the beam member 9 to the outside in the longitudinal direction is regulated. In addition, in the fitting state of the fixing member 41, a lower edge of each of the side wall portions 41e and 41f which inclines to the outside in the longitudinal direction and the downside is fitted to the upper surface of the inclined plate portion 17c which inclines to the outside in the longitudinal direction and the downside, and presses the same to the downside. Thus, the attaching portion 17 and the fitting portion 37 are more firmly fastened to each other in the vertical direction.

According to this embodiment, the fixing member 41 is engaged with the beam member 9 by being fitted to the fitting portion 37 from the upside, and hence the backlash in the longitudinal direction between the beam member 9 and the upper unit 5 can be more reliably regulated. In addition, the lower edges of the side wall portions 41 e and 41 f of the fixing member 41 fitted to the fitting portion 37 press the inclined plate portion 17c to the downside, and hence the backlash also in the vertical direction between the beam member 9 and the upper unit 5 can be more reliably regulated.

The present invention is not limited to the above-mentioned embodiments, and may be embodied in several forms without departing from the spirit or essential characteristics thereof.

In the above-mentioned embodiments, although the beam member 9 is fitted to the fitting portion 37 from the outside in the longitudinal direction, this should not be construed restrictively. For example, the fitting portion 37 may be opened to the upside so that the beam member 9 is fitted into the fitting portion 37 from the upside. With this principle, advantages similar to those in the above-mentioned first embodiment can be obtained even with the structure in which the attaching portion 17 is fitted into the fitting portion 37 from the upside.

Further, in the above-mentioned embodiments, the beam member 9 is fitted into the fitting portion 37 so as to suppress the backlashes between the beam member 9 and the upper unit 5. In addition, the beam member 9 and the upper unit 5 may be fixed to each other with a screw or a bolt for additional securement. Alternatively, in the state in which the beam member 9 is fitted into the fitting portion 37, for example, the tongue-like portion 17e may be bent to the outside in the longitudinal direction so that the side edge on the inside in the longitudinal direction defining the opening portion 15i is swaged.

Still further, in the above-mentioned embodiments, although the rubber bush 31 is externally inserted to the shaft portion of the earthquake-resistant bolt 23 correspondingly to the bolt through-hole 19i of the floor wall portion 19a of the upper earthquake-resistant bracket 19, the rubber bush 31 may be omitted.

Yet further, in the above-mentioned embodiments, although the guide projecting-wall portions 15d and 15d are formed by bending, this should not be construed restrictively. For example, the guide projecting-wall portions 15d and 15d may be welded to the lower surface of the guide top-wall portion 15b.

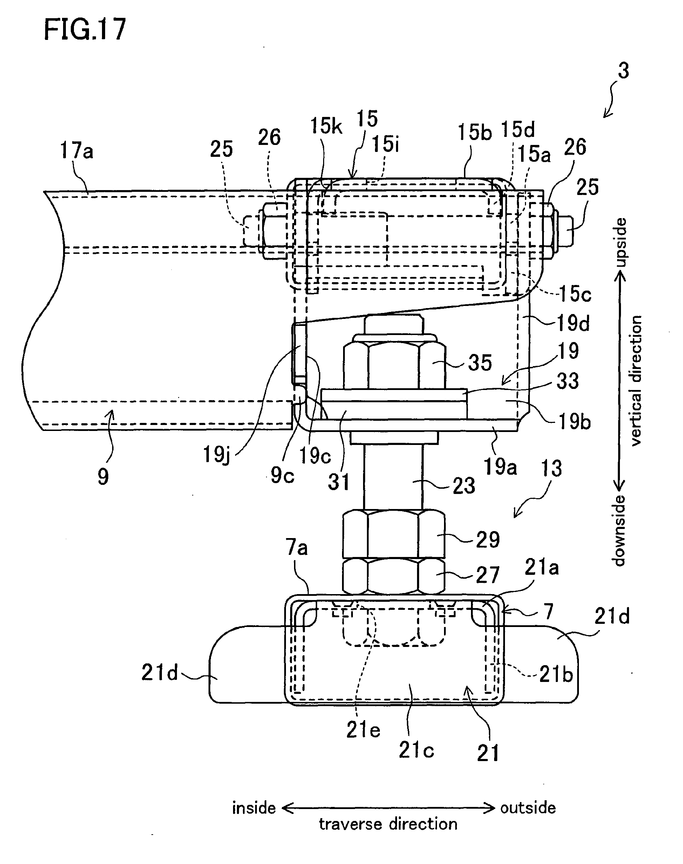

Yet further, in the above-mentioned embodiments, although the jettied portion 21d is formed to project only to the inside in the traverse direction, this should not be construed restrictively. As illustrated, for example, in FIG. 17, the jettied portion 21d may be formed to project to both the sides in the traverse direction in accordance with the installation space. With this structure, both the jettied portions 21d and 21d function as diagonal brace members on both the sides in the traverse direction, and hence the unit 3 at the time of installation and the vibration isolator base 1 after completion of assembly can be supported with much higher stability.

Yet further, in the above-mentioned embodiments, although the jettied portion 21d is formed integrally with the transverse wall portion 21c, this should not be construed restrictively. For example, the jettied portion 21 d may be formed by bending of a part of the side wall portion 21b to the traverse direction, the part being extended to the outside in the longitudinal direction.

Yet further, in the above-mentioned embodiments, although the lower earthquake-resistant bracket 21 is formed by mere bending of a steel plate, for example, a side edge on the outside in the longitudinal direction of the side wall portion 21b may be welded to the transverse wall portion 21c or the jettied portion 21d.

Yet further, in the above-mentioned embodiments, although the side wall portion 21b of the lower earthquake-resistant bracket 21 is formed to straightly extend in the longitudinal direction, this should not be construed restrictively. For example, a V-shaped rib recessed to the inside in the traverse direction and extending in the vertical direction may be formed at a part of the side wall portion 21b. With this structure, rigidity of the lower earthquake-resistant bracket 21 can be further enhanced without an increase in weight.

Yet further, in the above-mentioned embodiments, although the vibration isolator base 1 is used as an vibration isolator table for an air-conditioner, this should not be construed restrictively. For example, the vibration isolator base 1 is applicable as a vibration isolator base for various equipments such as a liquid pumping unit or a boiler.

As described above, the above-mentioned embodiments are merely illustrative in all aspects and should not be construed restrictively. In addition, all modifications and variations within the range of equivalents of the claims fall within the range of the present invention.

As has been described above, the present invention is suitable to a vibration isolator base and the like used for installation of equipments which generate large vibration.

## Claims

1. A vibration isolator base (1) comprising:
a pair of units (3) which are arranged parallel to each other, in each of which a vibration isolator body (11) is interposed between an upper unit (5) and a lower unit (7) each constituted by a long angular pipe member, and in which the upper units (5) in pairs are coupled to each other at both end portions thereof by beam members (9), wherein
both the end portions of each of the upper units (5) are each provided with a fitting portion (37),
the beam members (9) are fitted into the fitting portions (37) of the upper units (5) so as to couple the upper units (5) to each other, and
the vibration isolator base (1) includes
a first regulating means which is configured to regulate a backlash in a vertical direction between the beam member (9) and the upper unit (5) by fitting of the beam member (9) into the fitting portion (37),
a second regulating means which is configured to regulate a backlash in a longitudinal direction in which the upper unit (5) extends between the beam member (9) and the upper unit (5) by fitting of the beam member (9) into the fitting portion (37), and
a third regulating means which is configured to regulate a backlash in a traverse direction in which the upper units (5) are arranged between the beam member (9) and the upper unit (5) by fitting of the beam member (9) into the fitting portion (37).

2. The vibration isolator base (1) according to claim 1, wherein
each of the fitting portions (37) is open to an outside in the longitudinal direction, each of the beam members (9) includes an attaching portion (17) which is fitted from the outside in the longitudinal direction into each of the fitting portions (37) while being elastically deformed mainly in the vertical direction,
the attaching portion (17) is provided with a groove portion (17d) extending in the longitudinal direction,
each of the fitting portions (37) is provided with
a projecting portion (15d) which is fitted to the groove portion (17d) by fitting of the attaching portion (17) to each of the fitting portions (37) from the outside in the longitudinal direction, and
an engagement portion (15g) which is engaged with the attaching portion (17) from the outside in the longitudinal direction,
the first regulating means is constituted at least by the fitting portion (37) and the attaching portion (17),
the second regulating means is constituted at least by the fitting portion (37), the attaching portion (17), and the engagement portion (15g), and
the third regulating means is constituted at least by the groove portion (17d) and the projecting portion (15d).

3. The vibration isolator base (1) according to claim 2, wherein
each of the fitting portions (37) includes
two first wall portions (15a) facing each other in the traverse direction,
a second wall portion (15b) coupling the two first wall portions (15a) to each other at upper edges thereof and extending to a further outside in the longitudinal direction relative to side edges on the outside in the longitudinal direction of the two first wall portions (15a), and
two third wall portions (15c) each extending to the outside in the longitudinal direction from a lower portion of each of the side edges on the outside in the longitudinal direction of the two first wall portions (15a),
the attaching portion (17) includes
a substantially horizontal first plate portion (17a) extending in the longitudinal direction,
a second plate portion (17b) extending to a downside from a side edge on the inside in the longitudinal direction of the first plate portion (17a), and
a third plate portion (17c) extending from a lower edge of the second plate portion (17b) in a manner of inclining to the downside toward the outside in the longitudinal direction,
the attaching portion (17) is fitted into each of the fitting portions (37) so that contact is made in the following pairs: the first plate portion (17a) and the second wall portion (15b), the second plate portion (17b) and the two first wall portions (15a), and the third plate portion (17c) and the two third wall portions (15c), and
the first regulating means is constituted at least by the second wall portion (15b), the first plate portion (17a) pressing the second wall portion (15b), the third wall portion (15c), and the third plate portion (17c) pressing the third wall portion (15c).

4. The vibration isolator base (1) according to claim 3, wherein
the engagement portion (15g) constitutes two stopper portions (15g) each formed on an end portion on the outside in the longitudinal direction of the upper edge of the two third wall portions (15c) and protruding to an upside,
the third plate portion (17c) climbs over the two stopper portions (15g) from the outside in the longitudinal direction so as to be sandwiched between the two stopper portions (15g) and the two first wall portions (15a) in such a manner that an end on the outside in the
longitudinal direction of the third plate portion (17c) is hooked to the two stopper portions (15g), and
the second regulating means is constituted at least by the two stopper portions (15g), the third plate portion (17c) pressing the two stopper portions (15g), the two first wall portions (15a), and the second plate portion (17b) pressing the two first wall portions (15a).

5. The vibration isolator base (1) according to claim 3 or 4, wherein
the projecting portion (15d) constitutes a fourth wall portion (15d) extending from the second wall portion (15b) to the downside and in the longitudinal direction,
the groove portion (17d) constitutes a cutout groove portion (17d) formed in the first plate portion (17a) and open to the inside in the longitudinal direction, and
the third regulating means is constituted at least by the fourth wall portion (15d) and the cutout groove portion (17d).

6. The vibration isolator base (1) according to claim 5, wherein
the fourth wall portion (15d) is formed by bending, to the downside, of a side edge on each side in the traverse direction of a part of the second wall portion (15b) which part is on the outside in the longitudinal direction relative to the two first wall portions (15a), and the fourth wall portion (15d) extends from the second wall portion (15b) to the downside through intermediation of a round portion (15k),
multiple ones of the cutout groove portion (17d) are formed at positions corresponding to the fourth wall portions (15d), and
an edge portion in the traverse direction of each of the two cutout groove portions (17d) climbs onto the round portion (15k).

7. The vibration isolator base (1) according to any one of claims 3 - 6,
wherein
the beam member (9) is arranged on the outside in the longitudinal direction of the fitting portion (37) and further includes a fourth plate portion (9a) continuous with the attaching portion (17),
an angle formed between the first plate portion (17a) and the fourth plate portion (9a) is set to be lower than an angle formed between the second wall portion (15b) and an end (19c) on the outside in the longitudinal direction of the upper unit (5) seen in the traverse direction, and
the first regulating means further includes the fourth plate portion (9a).

8. The vibration isolator base (1) according to any one of claims 4-7,
wherein
the first plate portion (17a) is provided with a through-hole (17f) passing therethrough in the vertical direction,
the second wall portion (15b) is provided with a protruding portion (15j) formed at a part corresponding to the through-hole (17f) and protruding to the downside so as to be fitted into the through-hole (17f), and
the second regulating means further includes the through-hole (17f) and the protruding portion (15j).

9. The vibration isolator base (1) according to any one of claims 4 - 7, wherein the second regulating means further includes another fixing member (39, 41) engaged with the beam member (9) by being fitted to the fitting portion (37) from the upside.

10. The vibration isolator base (1) according to any one of claims 1 to 9,
wherein
the fitting portion (37) and an upper bracket (19) which cooperates with a shaft member (23) extending in the vertical direction are provided at each of the end portions of the upper unit (5),
a lower bracket (21) for reinforcing the lower unit (7) and fixing the shaft member (23) is provided at each end portion of the lower unit (7), and
the lower bracket (21) includes
a top wall portion (21a), and
a side wall portion (21b) extending to the downside from a side edge on each side in the traverse direction of the top wall portion (21a), and is fitted to an inside of the lower unit (7).

11. The vibration isolator base (1) according to claim 10, wherein the lower bracket (21) is provided with a jettied wall portion (21d) formed at an end portion on the outside in the longitudinal direction thereof and extending in the traverse direction.

12. The vibration isolator base (1) according to claim 11, wherein
the lower bracket (21) further includes a transverse wall portion (21c) extending to the downside from a side edge on the outside in the longitudinal direction of the top wall portion (21a), and
the jettied wall portion (21d) is formed integrally with the transverse wall portion (2 1 c).
